# EUROPÄISCHE PATENTSCHRIFT

(11) **EP 1 218 996 B1**
(45) Veröffentlichungstag und Bekanntmachung des Hinweises auf die Patenterteilung: **22.09.2004**
(21) Anmeldenummer: 00967777.4
(22) Anmeldetag: 26.09.2000
(51) Int. Cl.: H02G 3/20, F21V 21/02

(54) **SYSTEM ZUM BEFESTIGEN UND ZUM ANSCHLUSS EINES ELEKTRISCHEN VERBRAUCHERS AN EINER DECKE ODER WAND**
SYSTEM FOR FASTENING AND CONNECTING AN ELECTRICAL CONSUMER TO A CEILING OR WALL
SYSTEME POUR FIXER ET CONNECTER UN CONSOMMATEUR ELECTRIQUE CONTRE UN PLAFOND OU UN MUR

(30) Priorität: 29.09.1999 DE 19946621
(43) Veröffentlichungstag der Anmeldung: 03.07.2002
(73) Patentinhaber: Hofmann, Georg, 97437 Hassfurt (DE); Gläser, Dietmar, 97519 Riedbach (DE)
(72) Erfinder: Hofmann, Georg, 97437 Hassfurt (DE); Gläser, Dietmar, 97519 Riedbach (DE)
(74) Vertreter: Rau, Albrecht
(86) Internationale Anmeldenummer: PCT/EP2000/009355
(87) Internationale Veröffentlichungsnummer: WO 2001/024335

(56) Entgegenhaltungen:
- EP-A- 0 370 825
- EP-A- 0 752 746
- DE-U- 29 810 467
- FR-A- 2 707 808
- US-A- 3 798 584

## Beschreibung

### Gebiet der Erfindung

Die Erfindung betrifft ein System zum Befestigen und zum Anschluss eines elektrischen Verbrauchers an einer Decke eines Gebäudes nach den oberbegriffsbildenden Merkmalen des Anspruchs 1, und sie ist insbesondere vorteilhaft zum Befestigen und zum Anschluss einer hängenden Deckenleuchte anwendbar.

### Hintergrund der Erfindung

Ein derartiges Befestigungssystem für eine Leuchte ist aus der zum Anmeldezeitpunkt noch nicht veröffentlichten deutschen Patentanmeldung 198 26 095.4-34 vorbekannt. Dieses System ist im Bereich des aus der Decke herausragenden oder an dieser endenden Leitungsendes einer unter oder über Putz verlegten Zuleitung für elektrischen Strom montierbar und besteht im wesentlichen aus einem deckenseitigen Anschlussstück mit ersten Anschlüssen für die Adern der elektrischen Zuleitung sowie aus einem leuchtenseitigen Gehäuse mit zweiten Anschlüssen für die Adern einer Verbraucherleitung, die im Montagezustand über Kontakte miteinander verbunden sind. Darüber hinaus weist dieses System Befestigungsmittel zur Lagefixierung gegenüber der Decke sowie weitere Befestigungselemente für eine Zugentlastung der Verbraucherleitung auf.

Dieses relativ einfach aufgebaute und leicht montierbare Befestigungssystem hat jedoch den Nachteil, dass es konstruktionsbedingt zu wenig Platz für die Unterbringung der aus der Decke mit vorgeschriebenen Kabellängen herausragenden Adern der elektrischen Zuleitung aufweist, so dass sich entweder die Fixierung der Deckenleuchte schwierig gestaltet oder die Adern der elektrischen Zuleitung unzulässig kurz gehalten werden müssen. Wird dieses System darüber hinaus als Verteilerdose genutzt, bei der von einer ankommenden elektrischen Zuleitung der Strom auf weitere elektrische Zuleitungen verteilt wird und sich dementsprechend die Anzahl der im System unterzubringenden Adern erhöht, ist eine Montage des Gehäuses am deckenseitigen Anschlussstück nicht mehr möglich. Ebenso hat sich bei diesem System der Kabelanschlussraum als nicht vorschriftsmäßig in der Hinsicht erwiesen, dass die Adern der elektrischen Zuleitung oder die Adern der mit dieser verbundenen weiteren Zuleitungen nicht mit der Decke oder den Befestigungsmitteln des Systems an der Decke in Kontakt kommen dürfen. Weiterhin ist es bei dem bekannten Befestigungssystem von Nachteil, dass es bei vorschriftsgemäßer Ausbildung der eingesetzten Kontakte eine relativ große Bauhöhe und einen großen Baudurchmesser erfordert und dass die Arretierung des deckenseitigen Gehäuses am deckenseitigen Anschlussstück nur spürbar und nicht zwecks visueller Kontrolle der korrekten Montage auch sichtbar ist. Da das bekannte Befestigungssystem auch sonst keinerlei Montagehinweise und/oder Kontrollfunktionen aufweist und somit nicht selbsterklärend aufgebaut ist, ist zu dessen korrekter Montage für einen Anwender ohne Vorkenntnisse in jedem Fall das Durchlesen einer entsprechenden Montageanleitung erforderlich. Gleichfalls ist festzustellen, dass das bekannte Befestigungssystem nur zur Befestigung einer bestimmten Leuchtenart geeignet ist und nicht über mehrere Möglichkeiten zur Befestigung verschiedener Leuchtenarten verfügt.

Ein weiteres Befestigungssystems für eine Deckenleuchte ist durch die französische Patentschrift FR 2 707 808 A1 bekannt. Dieses, als Vorrichtung zum gleichzeitigen Anschließen und Befestigen von Leuchtkörpern bezeichnete Befestigungssystem besteht im Wesentlichen aus einer hohlzylindrischen Dekkenbuchse mit einem inneren Axialflansch, an dem eine mit koaxial angeordneten elektrischen Kontakten ausgebildete Kontaktscheibe in die Deckenbuchse einschraubbar ist. Darüber hinaus sind in die Innenwandung der Deckenbuchse drei gleichmäßig beabstandete Bajonettlaufbahnen eingearbeitet, die mit entsprechenden Bajonettnasen am Umfang einer an der Leuchte vormontierbaren und das Befestigungssystem komplettierenden Verschlussplatte in Wirkverbindung stehen. Diese Verschlussplatte ist ebenfalls mit koaxial angeordneten elektrischen Kontakten ausgebildet, die beim Befestigen der Leuchte in der Deckenbuchse mittels des Bajonettverschlusses mit den Kontakten der Kontaktscheibe in elektrische Verbindung treten.

Bei diesem Befestigungssystem ist es jedoch hauptsächlich von Nachteil, dass die mechanische Befestigung der Leuchte und deren elektrische Verbindung gleichzeitig durch die an der Leuchte vormontierte Verschlussplatte realisiert wird, so dass diese Verschlussplatte als elektrisches Bauteil in unzulässiger Weise alle aus dem Gewicht der zu befestigenden Leuchte resultierende Lasten aufnehmen muss. Darüber hinaus ist es bei diesem Befestigungssystem als nachteilig festzustellen, dass es durch die symmetrische Anordnung der Bajonettlaufbahnen und der Bajonettnasen an der Deckenbuchse und an der Verschlussplatte zu Fehlern bei der Montage sowie zu Fehlkontaktierungen zwischen den einzelnen elektrischen Anschlüssen kommen kann.

### Aufgabe der Erfindung

Der Erfindung liegt deshalb die Aufgabe zugrunde, ein System zum Befestigen und zum Anschluss eines elektrischen Verbrauchers an einer Decke eines Gebäudes, beispielsweise für eine hängende Deckenleuchte zu konzipieren, bei welchem die aufgezeigten Nachteile bekannter Befestigungssysteme beseitigt sind und welches insbesondere für Anwender ohne Vorkenntnisse auch ohne gesonderte Montageanleitung leicht montierbar ist.

### Zusammenfassung der Erfindung

Diese Aufgabe wird bei einem Befestigungssystem nach dem Oberbegriff des Anspruchs 1 erfindungsgemäß dadurch gelöst, dass die ersten Anschlüsse und die ersten Kontakte sowie die zweiten Anschlüsse und die zweiten Kontakte jeweils auf gesonderten, in ihrer Grundform baugleich ausgebildeten Kontaktträgerplatten angeordnet sind, welche nach dem Einfügen der Adern der elektrischen Zuleitung und der Verbraucherleitung in die Anschlüsse jeweils durch Formschluss im Deckenadapter beziehungsweise im Leuchtenadapter arretierbar sind, und welche durch an den Kontaktträgerplatten sowie im Dekkenadapter und im Leuchtenadapter angeordnete komplementäre Formschlusselemente derart im Deckenadapter und im Leuchtenadapter verdrehsicher lagefixierbar sind, dass diese bei der Montage des Systems über den Schnellverschluss unter eindeutiger Zuordnung der Kontakte der Verbraucherleitung zu den Kontakten der elektrischen Zuleitung miteinander in polgerechte elektrische Verbindung treten.

In zweckmäßiger Weiterbildung des erfindungsgemäßen Befestigungssystems wird es im weiteren vorgeschlagen, dass die erste und die zweite Kontaktträgerplatte jeweils über adapterinnenwandseitig Rastnasen in den Deckenadapter bzw. in den Leuchtenadapter einklipsbar sind und bevorzugt aus je zwei kreisförmigen Teilplatten bestehen, welche ebenfalls durch einerseits angeordnete Rastnasen und andererseits angeordnete Rastschlitze miteinander verbindbar sind. Dies bedeutet, dass jeweils eine Teilplatte bevorzugt drei konzentrisch sowie symmetrisch winkelversetzt zueinander angeordnete Rastnasen aufweist, die in entsprechend angeordnete Rastschlitze in der anderen Teilplatte einrasten und somit beide Teilplatten lösbar miteinander verbinden. Denkbar sind jedoch auch mehr oder weniger als drei und/oder anders angeordnete Rastnasen und Rastschlitze oder auch andere geeignete Rastverbindungen zwischen den Teilplatten der Kontaktträgerplatten.

Weiterhin wird es in zweckmäßiger Weiterbildung des erfindungsgemäßen Befestigungssystems vorgeschlagen, dass zwischen den Teilplatten der Kontaktträgerplatten jeweils mehrere, die elektrischen Anschlüsse und die gegenseitigen Kontakte aufweisende Metallbiegeteile angeordnet sind. Als besonders vorteilhaft hat es sich dabei erwiesen, in eine Oberfläche jeweils einer Teilplatte der Kontaktträgerplatten bevorzugt drei um 120° versetzt zueinander angeordnete, jeweils von deren Plattenrand ausgehende und kreisringsegmentförmige ausgebildete Kontakttaschen einzuformen, in welche die Metallbiegeteile mit den elektrischen Anschlüssen und gegenseitigen Kontakten eingelegt werden.

An einer Oberfläche der jeweils anderen Teilplatte sind dabei entsprechend angeordnete Druckleisten angeformt, mit denen die Metallbiegeteile in den Kontakttaschen der einen Teilplatten beim Verbinden mit den anderen Teilplatten über die genannte Rastverbindung lagefixiert werden. Die Lagefixierung der Metallbiegeteile in den Kontakttaschen kann jedoch auch alternativ durch Ausgießen der Kontakttaschen mit einem Kunstharz oder in anderer geeigneter Weise erfolgen.

Nach dem Einfügen der Adern der elektrischen Zuleitung und der Verbraucherleitung in die Anschlüsse weisen Kontaktträgerplatten mit ihren Kontakttaschen zueinander und bei der Montage des Systems über die Kontakte treten diese miteinander in elektrische Steckverbindung und tragen gleichzeitig zur weiteren mechanischen Arretierung des Befestigungssystems bei. Die nach dem Einstecken der Adern in die Anschlüsse verbleibenden Aderlängen werden dabei während des Einrastens der Kontaktträgerplatten in den Deckenadapter bzw. in den Leuchtenadapter in eigens dafür vorgesehenen Hohlräumen zwischen den Kontaktträgerplatten und dem Boden des Deckenadapters bzw. dem Boden des Leuchtenadapters verstaut. Anstelle der adapterinnenwandseitigen Rastnasen, die nach dem Einklipsen der Kontaktträgerplatten deren Randpartie umgreifen, ist es natürlich auch möglich, andere geeignete Rastverbindungen, beispielsweise am Rand der Kontaktträgerplatten angeordnete Rastnasen, die in adapterinnenwandseitige Vertiefungen einrasten, oder auch Schraubverbindungen oder dergleichen zur Befestigung der Kontaktträgerplatten im Deckenadapter bzw. im Leuchtenadapter anzuwenden.

Hinsichtlich der Metallbiegeteile hat es sich in weiterer Ausgestaltung des erfindungsgemäßen Befestigungssystems als vorteilhaft erwiesen, dass diese in der ersten Kontaktträgerplatte bevorzugt als Kontaktbuchsen ausgebildete Kontakte zur Verbraucherleitung und als Doppelklemmlaschen ausgebildete erste Anschlüsse für die Adern der elektrischen Zuleitung aufweisen. Die Kontaktbuchsen der Metallbiegeteile verlaufen dabei in ihrer lagefixierten Stellung in den Kontakttaschen koaxial zum Mittelpunkt der Kontaktträgerplatte und sind über einen seitlichen Durchbruch in den Kontakttaschen der einen Teilplatte kontaktierbar. Der Anschluss der Adern der elektrischen Zuleitung an den Doppelklemmlaschen erfolgt dagegen über entsprechende Durchgangsbohrungen in der anderen Teilplatte der Kontaktträgerplatte, wobei bei Doppelklemmlaschen jeweils zwei dieser Durchgangsbohrungen nebeneinander angeordnet sind.

Bei den Metallbiegeteilen in der zweiten Kontaktträgerplatte hat es sich demgegenüber als vorteilhaft erwiesen, die Kontakte zur elektrischen Zuleitung als Kontaktmesser und die zweiten Anschlüsse für die Adern der Verbraucherleitung ebenfalls als Doppelklemmlaschen auszubilden. Die Kontaktmesser der Metallbiegeteile verlaufen dabei in ihrer lagefixierten Stellung in den Kontakttaschen ebenfalls koaxial zum Mittelpunkt der Kontaktträgerplatte und ragen seitlich aus den Kontakttaschen der einen Teilplatte heraus. Der Anschluss der Adern der Verbraucherleitung an den Doppelklemmlaschen erfolgt auch bei dieser Kontaktträgerplatte über entsprechende Durchgangsbohrungen in der anderen Teilplatte der Kontaktträgerplatte, die ebenfalls entsprechend der Anzahl von Klemmlaschen pro Metallbiegeteil doppelt ausgeführt sind.

Die Verwendung von Doppelklemmlaschen an den Metallbiegeteilen beider Kontaktträgerplatten hat sich als besonders anwenderfreundlich erwiesen, da somit der Anschluss der Adern der elektrischen Zuleitung und der Verbraucherleitung zumindest bei Vollmaterialadern werkzeuglos durch einfaches Einstecken der Adern in jeweils eine der Klemmlaschen möglich ist. Das Lösen der Anschlüsse erfolgt dabei durch Einfügen eines geeigneten Werkzeuges in die Mitte der Klemmlaschen durch eine eigens dafür vorgesehene zusätzliche Bohrung zwischen den beiden Durchgangsbohrungen je Anschluss für die Adern der elektrischen Zuleitung bzw. der Verbraucherleitung in den jeweils anderen Teilplatten der Kontaktträgerplatten hindurch. Eine einfache Zuordnung der einzelnen Adern zu den jeweiligen Klemmlaschen bei deren Anschluss erfolgt bevorzugt durch eine eingeprägte Beschriftung L1, L2 und N neben den jeweiligen Durchgangsbohrungen in den anderen Teilplatten der beiden Kontaktträgerplatten, so dass auch hier die Selbsterklärung des Befestigungssystems gewährleistet und eine unterschiedliche Kontaktierung am Decken- und Leuchtenadapter ausgeschlossen ist. Alternativ zu den beschriebenen Doppelklemmlaschen ist es auch möglich, die Metallbiegeteile der Kontaktträgerplatten nur mit Einfachklemmlaschen oder auch mit Mehrfachklemmlaschen auszubilden, je nach dem, ob das erfindungsgemäße Befestigungssystem als reine Leuchtenbefestigung verwendet wird oder zugleich eine Verteilerfunktion für eine oder mehrere weitere elektrische Leitungen ausüben soll. Ebenso ist es jedoch auch möglich, andere Befestigungsarten für die Anschlüsse der Adern der elektrischen Zuleitung und der Verbraucherleitung an den Metallbiegeteilen vorzusehen, beispielsweise an sich bekannte Lüsterklemmen- Schraubbefestigungen oder dergleichen.

Gemäß einer weiteren Ausgestaltung des erfindungsgemäßen Befestigungssystems ist der deckenseitig angeordnete Boden des topfförmigen Deckenadapters bevorzugt in das Adapterinnere eingerückt ausgebildet und im Montagezustand nur mit einer Ringfläche an der Decke lagefixiert. Dadurch weist das erfindungsgemäße Befestigungssystem das vorteilhafte Merkmal auf, dass zwischen der Decke und dem Boden des Deckenadapters ein Zwischenraum gebildet wird, der bevorzugt als Raum für eventuell notwendige Schutzhüllen für die durch diesen hindurch führende elektrische Zuleitung sowie für weitere elektrische Leitungen genutzt werden kann.

Dementsprechend wird gemäß einer weiteren Ausgestaltung des erfindungsgemäßen Befestigungssystems vorgeschlagen, dass der Boden des Deckenadapters bevorzugt zwei auf einer horizontalen Adapterquerachse nebeneinander angeordnete, kreisförmige Sollbruchkerben für Durchbrüche aufweist, die zur Einführung der elektrischen Zuleitung in den sowie ggf. zur Abführung einer weiteren elektrischen Leitung aus dem Deckenadapter vorgesehen sind. Dadurch ist es möglich, den Deckenadapter wahlweise als reine Leuchtenbefestigung oder zeitgleich auch als Verteilerdose zu nutzen, indem entweder nur einer der beiden Durchbrüche zur Durchführung der elektrischen Zuleitung oder beide Durchbrüche zur zusätzlichen Abführung einer weiteren elektrischen Leitung aktiviert und bei Bedarf mit den bereits erwähnten Schutzhüllen versehen werden. Denkbar wäre es in diesem Zusammenhang auch, noch weitere dieser Sollbruchkerben im Boden des Deckenadapters anzuordnen und zur Abführung weiterer elektrischer Verteilerleitungen aus dem Deckenadapter zu nutzen. Besonders vorteilhaft ist es dabei, dass die Aktivierung der Durchbrüche durch manuelles Ausbrechen und ohne Zuhilfenahme von jeglichem Werkzeug erfolgen kann.

Gemäß einer weiteren Ausgestaltung des erfindungsgemäßen Befestigungssystems ist an die Innenwandung des Deckenadapters bevorzugt ein parallel zu dessen axialer Symmetrieachse verlaufender Dreieckssockel angeformt, der mit seiner Profilspitze entlang der horizontalen Adapterquerachse weisend angeordnet ist. Dieser Dreieckssockel dient zum verdrehsicheren Einsetzen der ersten Kontaktträgerplatte in den Deckenadapter und weist somit, wie später noch ausführlich beschrieben wird, automatisch den Weg zur richtigen Montage dieser Kontaktträgerplatte. Ein derartiger Sockel kann jedoch auch ein dem Dreieckssockel ähnliches Querschnittsprofil, beispielsweise ein Halbrund- oder Trapezprofil oder dergleichen, aufweisen.

In weiterer Ausgestaltung des erfindungsgemäßen Befestigungssystems sind über diesen Dreieckssockel hinaus bevorzugt noch zwei sich gegenüberliegende und den Boden des Deckenadapters durchdringende Halbrundsockel an die Innenwandung des Deckenadapters angeformt, in die jeweils ein in Umfangsrichtung des Deckenadapters und ein quer zu dieser verlaufendes Durchgangs-Langloch für Befestigungsschrauben angeordnet ist, mit denen der Dekkenadapter an der Decke befestigt werden kann. Diese Halbrundsockel verlaufen als weiteres Merkmal des erfindungsgemäßen Befestigungssystems bevorzugt parallel zur axialen Symmetrieachse des Deckenadapters und sind auf einer um 90° zur horizontalen Adapterquerachse versetzten vertikalen Adapterlängsachse angeordnet. Der Deckenadapter kann somit in an sich bekannter Weise mit zwei Befestigungsschrauben an der Decke befestigt werden und weist durch die winkelversetzte Anordnung der Durchgangs-Langlöcher auch entsprechende Toleranzausgleichsmöglichkeiten auf. Zusätzlich umschließen die derart ausgebildeten Halbrundsockel des Deckenadapters allseitig die Befestigungsschrauben und schließen somit in vorschriftsmäßiger Weise ein Berühren der elektrischen Leitungen mit den Befestigungsschrauben aus.

Weiterhin wird es in Ausgestaltung des erfindungsgemäßen Befestigungssystems vorgeschlagen, dass an der Innenseite des Bodens des Deckenadapters ein entlang der horizontalen Adapterquerachse verlaufender und in die gleiche Richtung wie der oben erwähnte Dreieckssockel weisende Pfeil angeformt ist, der durch einen gleichfalls angeformten, parallel zu diesem verlaufenden Schriftzug "LEUCHTE" unterbrochen ist. Dieses Merkmal trägt ebenfalls zur Selbsterklärung des erfindungsgemäßen Befestigungssystems bei, beispielsweise bei der Montage einer Langfeldleuchte mit zwei Seilabhängungen an der Decke, da somit auch dem Anwender ohne Vorkenntnisse deutlich angezeigt wird, den Deckenadapter so an der Decke zu positionieren, dass der Schriftzug mit dem Pfeil zur Mitte der Langfeldleuchte zeigt.

In zweckmäßiger Weiterbildung des erfindungsgemäßen Befestigungssystems wird es des weiteren vorgeschlagen, den Schnellverschluss zwischen dem Deckenadapter und dem Leuchtenadapter bevorzugt als Bajonettverschluss auszubilden und dementsprechend in die Außenwandung des Deckenadapters bevorzugt drei unsymmetrisch winkelversetzt zueinander angeordnete Bajonettlaufbahnen einzuformen. Hierbei ist es jedoch auch möglich, mehr oder weniger als drei Bajonettlaufbahnen in die Außenwandung des Deckenadapters einzuarbeiten und diese unsymmetrisch winkelversetzt zueinander anzuordnen. Die unsymmetrische Anordnung der Bajonettlaufbahnen am Umfang des Dekkenadapters stellt dabei ebenfalls eine Maßnahme zur Selbsterklärung des erfindungsgemäßen Befestigungssystems dar, da somit auch der Leuchtenadapter an dem in oben beschriebener Weise bereits genau an der Decke positionierten Deckenadapters in nur einer möglichen, genau definierten Stellung an diesem befestigt werden kann und somit Fehlkontaktierungen zwischen dem Deckenadapter und dem Leuchtenadapter ausgeschlossen sind.

Die Bajonettlaufbahnen am Deckenadapter bestehen dabei in vorteilhafter Ausgestaltung der Erfindung jeweils aus einer parallel zur axialen Symmetrieachse des Deckenadapters verlaufenden Einführnut sowie aus einer in dessen Umfangsrichtung verlaufenden, jeweils in die Einfühmut mündenden Fixiernut. Als besonders vorteilhaft hat es sich dabei erwiesen, eine der Bajonettlaufbahnen mit ihrer Einführnut in Höhe der horizontalen Adapterquerachse anzuordnen und ausgehend von dieser Grundposition der einen Bajonettlaufbahn die unsymmetrisch winkelversetzten Positionen der anderen Bajonettlaufbahnen festzulegen. Ebenso ist es vorteilhaft, die Nutwände der Einführnuten der Bajonettlaufbahnen an ihrem leuchtenseitigen Nutanfang mit Einführschrägen auszubilden, welche die Einführnuten zur Montageerleichterung des Leuchtenadapters am Deckenadapter geringfügig verbreitern.

Gemäß einer weiteren Ausgestaltung des erfindungsgemäßen Befestigungssystems wird es hinsichtlich der Bajonettlaufbahnen am Deckenadapter noch vorgeschlagen, die leuchtenseitigen Nutwände der Fixiemuten der Bajonettlaufbahnen jeweils am Übergang zu ihren Einführnuten mit einer dachförmigen Erhöhung zur Arretierung des Leuchtenadapters auszubilden. Diese Erhöhung weist eine flachere Steigung in Fügerichtung und eine steilere Steigung in Löserichtung des Leuchtenadapters auf, so dass sich beim Fügen des Leuchtenadapters am Deckenadapter durch die Verspannung des Leuchtenadapters an der flacheren Steigung der Erhöhung ein leichter Drehwiderstand ergibt. Nach Überwindung des höchsten Punktes der dachförmigen Erhöhung führt deren steilere Steigung in Löserichtung zu einer schlagartigen Erleichterung der Drehbewegung und zu einer formschlüssigen Arretierung des Leuchtenadapters in den Fixiemuten der Bajonettlaufbahnen. Möglich sind jedoch auch hier andere geeignete formschlüssige Arretierungsmittel für den Leuchtenadapter am Deckenadapter, beispielsweise lösbare Rastmechanismen oder dergleichen.

Darüber hinaus hat es sich gemäß einer weiteren Ausgestaltung des erfindungsgemäßen Befestigungssystems hinsichtlich der Ausbildung der Bajonettlaufbahnen als vorteilhaft erwiesen, eine der Bajonettlaufbahnen an der deckenseitigen Nutwand ihrer Fixiernut mit einer halbkreisförmigen Nuterweiterung auszubilden, die den Endanschlag der Bajonettlaufbahn visuell kennzeichnet und nach korrekter Montage des Systems von einem am deckenseitigen Adapterrand des Leuchtenadapters entsprechend angeordneten, halbkreisförmigen Noppen verdeckbar ist. Dadurch ist es für den Anwender möglich, die korrekte Montage des Befestigungssystems zusätzlich zu der gefühlsmäßigen Kontrolle beim Einrasten des Leuchtenadapters in die Arretierung des Deckenadapters auch noch durch visuelle Kontrolle der Überdeckung der halbkreisförmigen Nuterweiterung am Deckenadapter mit dem halbkreisförmigen Noppen am Leuchtenadapter zu überprüfen. Natürlich ist es hierbei auch möglich, mehr als eine oder auch alle Bajonettlaufbahnen am Deckenadapter mit einer solchen halbkreisförmigen Nuterweiterung ihrer Fixiernuten auszubilden und eine entsprechende Anzahl halbkreisförmiger Noppen am Leuchtenadapter anzuordnen oder auch andere geeignete visuelle Kontrollmöglichkeiten der korrekten Montage des Befestigungssystems, beispielsweise sich jeweils ergänzende Striche oder Kerben oder dergleichen am Decken- und am Leuchtenadapter, vorzusehen.

Nach dem Einführen des mit seiner Kontaktträgerplatte versehenen Leuchtenadapters in die Einfühmuten der Bajonettlaufbahnen des ebenfalls mit seiner Kontaktträgerplatte versehenen Deckenadapters sind dann die Kontakttaschen beider Kontaktträgerplatten zunächst derart winkelversetzt zueinander angeordnet, dass sich die Kontaktbuchsen der Kontaktträgerplatte des Deckenadapters und die Kontaktmesser der Kontaktträgerplatte des Leuchtenadapters genau gegenüberliegen. Als vorteilhaft hat es sich darüber hinaus erwiesen, die Länge der Fixiernuten der Bajonettlaufbahnen, die Länge der Kontaktmesser bzw. die Tiefe der Kontaktbuchsen und die Breite der Kontakttaschen an den Kontaktträgerplatten unter Vermeidung von Überbestimmungen so aufeinander abzustimmen, dass diese sich nach dem Verdrehen des Leuchtenadapters an den Endanschlag der Fixiemuten der Bajonettlaufbahnen im Deckenadapter nicht gegenseitig behindern und sowohl eine sichere elektrische Kontaktierung als auch eine sichere mechanische Verbindung zwischen dem Deckenadapter und dem Leuchtenadapter gewährleisten. Ebenso hat es sich in sicherheitstechnischer Hinsicht als vorteilhaft erwiesen, jeweils die Kontakttaschen mit den Anschlüssen und Kontakten für den Schutzleiter an beiden Kontaktträgerplatten entgegen der Drehrichtung des Leuchtenadapters um einige Grad zur nächsten Kontakttasche hin versetzt anzuordnen, da somit die Kontakte des Schutzleiters bei der Montage des Leuchtenadapters am Deckenadapter zuerst miteinander in Verbindung treten und dementsprechend bei der Demontage des Leuchtenadapters vom Deckenadapter auch zuletzt voneinander getrennt werden. Lediglich darauf hingewiesen werden soll an dieser Stelle noch, dass der an der Decke montierte Deckenadapter mit eingeklipster Kontaktträgerplatte auch als aktive Deckendose mit Verteilerfunktion eingesetzt werden kann, die nur bei Bedarf bestromt und mit einem elektrischen Verbraucher ausgestattet wird. Bei dieser Anwendungsform ist es vorteilhaft, die Deckendose zum Schutz vor Schmutz und Staub mit einem geschlossenen Gehäuse zu verschließen, welches ähnlich wie der Leuchtenadapter über die Bajonettlaufbahnen am Dekkenadapter befestigt wird.

In weiterer zweckmäßiger Weiterbildung des erfindungsgemäßen Befestigungssystems wird es noch vorgeschlagen, den topfförmigen Leuchtenadapter an seinem leuchtenseitig angeordneten Boden mit einer halbkugelförmigen, geschlossenen Außenseite und einer ebenen Innenseite mit einer zentrischen Bohrung auszubilden. Diese Bohrung ist an der Innenseite des Bodens um die Außenkontur einer Sechskantmutter erweitert und durch Ausbrechen der Außenseite über eine Sollbruchkerbe sowie durch Einlegen einer passenden Sechskantmutter in die eingeformte Außenkontur zur wahlweisen Montage einer Rohrpendel- oder Einseilaufhängung einer Deckenleuchte vorgesehen. Die halbkugelförmig ausgebildete Außenseite des Bodens des Leuchtenadapters hat dabei vor allem gestalterischen Charakter und kann selbstverständlich auch eben oder in anderer geeigneter Form ausgebildet werden.

Gemäß einer weiteren Ausgestaltung des Leuchtenadapters des erfindungsgemäßen Befestigungssystems ist im Boden des Leuchtenadapters neben der zentrischen Bohrung für die Rohrpendel- oder Einseilaufhängung ein weiterer außenseitig geschlossener Durchbruch angeordnet, der ebenfalls durch Ausbrechen der Außenseite des Bodens über eine Sollbruchkerbe zur wahlweisen Montage einer exzentrischen Zugentlastung einer Deckenleuchte oder zur Kabeldurchführung der elektrischen Verbraucherleitung vorgesehen ist. Der Leuchtenadapter kann somit in vorteilhafter Weise durch wahlweises oder gleichzeitiges Aktivieren der verschiedenen Durchbrüche an seinem Boden an die unterschiedlichen Befestigungsarten einer Vielzahl verschiedener Deckenleuchten angepasst werden, wobei die Aktivierung der Durchbrüche auch hier wie am Deckenadapter durch manuelles Ausbrechen und ohne Zuhilfenahme von jeglichem Werkzeug erfolgen kann.

Um die Anpassungsfähigkeit des Leuchtenadapters noch um eine weitere Befestigungsart von Deckenleuchten zu erweitern und den Leuchtenadapter somit nahezu universell einsetzbar auszubilden, wird es in weiterer vorteilhafter Ausgestaltung des erfindungsgemäßen Befestigungssystems noch vorgeschlagen, an die Innenwandung des Leuchtenadapters zusätzlich noch zwei sich gegenüberliegend angeordnete und durch dessen Boden durchgehende Stufendurchbrüche anzuformen, die zum weiteren wahlweisen Einhängen der Seilnippel einer Zweiseilaufhängung einer Deckenleuchte vorgesehen sind. Diese Stufendurchbrüche sind bevorzugt in Form von parallel zur axialen Symmetrieachse des Leuchtenadapters verlaufenden Rundsockeln an die Innenwandung des Leuchtenadapters angeformt, in die ausgehend vom Boden des Leuchtenadapters jeweils eine Bohrung kleineren Durchmessers zur Durchführung der Seile der Zweiseilaufhängung eingearbeitet ist, welche stufenförmig in eine Bohrung größeren Durchmessers zur Arretierung der Seile der Zweiseilaufhängung übergeht. Als besonders vorteilhaft hat es sich erwiesen, diese Stufen-, durchbrüche derart an der Innenwandung des Leuchtenadapters anzuordnen, dass sie sich nach der Montage des Leuchtenadapters bzw. der Deckenleuchte am Deckenadapter auf den gleichen senkrechten Achsen wie die Durchgangs-Langlöcher für die Befestigungsschrauben des Deckenadapters befinden, da somit über die Zweiseilaufhängung eine optimale Lastaufnahme der Deckenleuchte über den Deckenadapter zur Decke ohne weitere Hebelwirkungen gewährleistet ist. Darüber hinaus sind die Stufendurchbrüche bevorzugt als bereits offene, am Boden des Leuchtenadapters sichtbare Bohrungen ausgebildet, wobei es jedoch auch möglich ist, diese ebenso wie die anderen Durchbrüche im Leuchtenadapter erst durch Ausbrechen des Bodens zu aktivieren.

Gemäß einer weiteren Ausgestaltung des Leuchtenadapters des erfindungsgemäßen Befestigungssystems wird es noch vorgeschlagen, dass der Leuchtenadapter deckenseitig bis zu einer etwa der Höhe des Deckenadapters entsprechenden Tiefe einen Innendurchmesser aufweist, der dem Außendurchmesser des Dekkenadapters entspricht. Dabei sind an dem mit diesem Innendurchmesser ausgebildeten Teil seiner Innenwandung bevorzugt drei von dessen deckenseitigen Adapterrand ausgehende Bajonettnasen angeformt, die in gleicher Weise wie die Bajonettlaufbahnen am Deckenadapter unsymmetrisch winkelversetzt zueinander angeordnet sind. Darüber hinaus weist eine der Bajonettnasen am Leuchtenadapter den bereits erwähnten halbkreisförmigen Noppen auf, der bei Überdeckung der halbkreisförmigen Nuterweiterung einer der Fixiernuten der Bajonettlaufbahnen am Deckenadapter die korrekte Montage des Befestigungssystems signalisiert. Zusätzlich sind die Bajonettnasen am Leuchtenadapter und die Fixiemuten der Bajonettlaufbahnen am Deckenadapter in ihrer Höhenanordnung bevorzugt derart aufeinander abgestimmt, dass nach dem Fügen des Leuchtenadapters am Deckenadapter eine dekorative Schattenfuge zwischen dem Rand des Leuchtenadapters und der Decke entsteht.

In weiterer zweckmäßiger Ausgestaltung weist der Leuchtenadapter des erfindungsgemäßen Befestigungssystems schließlich noch das Merkmal auf, dass dieser leuchtenseitig einen zum deckenseitigen Innendurchmesser abgestuft verkleinerten Innendurchmesser aufweist, wobei an dem mit diesem Innendurchmesser ausgebildeten Teil seiner Innenwandung, wie beim Deckenadapter, ein parallel zu dessen axialer Symmetrieachse verlaufender Dreieckssockel zum verdrehsicheren Einsetzen der zweiten Kontaktträgerplatte angeformt ist. Dieser Dreieckssockel ist in vorteilhafter Ausgestaltung des erfindungsgemäßen Befestigungssystems derart an die Innenwandung des Leuchtenadapters angeformt, dass er nach der Montage des Befestigungssystems entgegen der Fügerichtung des Leuchtenadapters um die Länge der Fixiemuten der Bajonettlaufbahnen am Deckenadapter versetzt zu dem gleichartigen Dreieckssockel des Deckenadapters angeordnet ist. Es ist jedoch auch möglich, den Dreieckssockel im Leuchtenadapter in anderer Weise versetzt oder auch gleichachsig zum Dreieckssockel des Deckenadapters anzuordnen und/oder genau wie beim Dreieckssockel des Deckenadapters mit einem dem Dreiecksprofil ähnlichem Querschnittsprofil, wie beispielsweise mit einem Halbrund- oder einem Trapezprofil, auszubilden. Zusätzlich zu diesem Dreieckssockel sind an dem mit dem verkleinerten Innendurchmesser ausgebildeten Teil der Innenwandung des Leuchtenadapters die bereits erwähnten Rastnasen angeformt, mit denen die zweite Kontaktträgerplatte nach dem Einfügen der Adern der Verbraucherleitung in deren Anschlüsse im Leuchtenadapter befestigt wird.

Entsprechend der zuvor beschriebenen Ausbildung des Deckenadapters und des Leuchtenadapters mit den als Montagehilfsmittel dienenden Dreieckssockeln weist eine weitere Ausgestaltung ein Merkmal auf, dem entsprechend die Kontaktträgerplatten als komplementäre Formschlusselemente zur verdrehsicheren Lagefixierung jeweils noch eine in deren Plattenrand eingearbeitete Dreiecksaussparung von der Größe des Profilquerschnitts der Dreieckssockel im Deckenadapter und im Leuchtenadapter aufweisen, mit welchen die Kontaktträgerplatten auf die Dreieckssockel im Dekkenadapter und im Leuchtenadapter aufschiebbar sind. Die Dreieckssockel im Deckenadapter und im Leuchtenadapter und die Dreiecksaussparungen in den Kontaktträgerplatten sind somit ebenfalls ein wichtiger Bestandteil zur Selbsterklärung des erfindungsgemäßen Befestigungssystems und gewährleisten im Zusammenhang mit den Beschriftungen an den Anschlüssen auf den Kontaktträgerplatten, dass es auch bei Anwendem ohne Vorkenntnisse weder zu Fehlanschlüssen bei den einzelnen Adern der elektrischen Zuleitung und der Verbraucherleitung noch zu Fehlkontaktierungen bei der Montage des Leuchtenadapters bzw. des Deckenleuchte am Deckenadapter kommt. Als selbstverständlich wird es dabei erachtet, dass bei Ausbildung der Dreieckssockel im Decken- und im Leuchtenadapter mit einem anderen Profilquerschnitt auch die Dreiecksaussparungen in den Kontaktträgerplatten mit einem anderen Profilquerschnitt auszubilden sind. Dabei ist es zur Vermeidung von Verwechslungen zwischen den beiden Kontaktträgerplatten des Befestigungssystems auch vorteilhaft, den Dreieckssockel im Deckenadapter und die Dreiecksaussparung in dessen Kontaktträgerplatte mit einem anderen oder in der Größe unterschiedlichen Profilquerschnitt auszubilden, als den Dreieckssockel im Leuchtenadapter und die Dreiecksaussparung in dessen Kontaktträgerplatte.

Das erfindungsgemäße System zum Befestigen und zum Anschluss eines elektrischen Verbrauchers an einer Decke eines Gebäudes, beispielsweise für eine hängende Deckenleuchte, weist somit gegenüber den aus dem Stand der Technik bekannten Befestigungssystemen den Vorteil auf, dass es durch eine Vielzahl optischer und technischer Montagehilfsmittel sowie durch verschiedenartigste Kontrollfunktionen selbsterklärend aufgebaut ist und somit auch von Anwendern ohne Vorkenntnisse ohne das Durchlesen einer entsprechenden Montageanleitung leicht und einfach sowie fehlerfrei montierbar ist. In technischer Hinsicht hat das erfindungsgemäße Befestigungssystem darüber hinaus den Vorteil, dass es sowohl im Deckenadapter als auch im Leuchtenadapter durch den zwischen den Kontaktträgerplatten und dem jeweiligen Adapterboden gebildeten Hohlraum ausreichend Platz bietet, um sowohl die aus der Dekke mit vorgeschriebenen Kabellängen herausragenden Adern der elektrischen Zuleitung als auch die ebenso mit vorgeschriebenen Kabellängen ausgebildeten Adern der Verbraucherleitung problemlos unterzubringen. Durch den ausreichend großen Hohlraum zwischen der ersten Kontaktträgerplatte und dem Boden des Deckenadapters ist es auch in vorteilhafter Weise möglich, das erfindungsgemäße Befestigungssystem als Verteilerdose zu nutzen, wobei sich durch Unterbringung des Befestigungssystems in einer zusätzlichen, in der Decke integrierten Dose mit einer geeigneten Kaschierung sogar eine vollwertige Unterputzversion ergibt. Ebenso ist es bei dem erfindungsgemäßen Befestigungssystem von Vorteil, dass die Befestigungsschrauben des Deckenadapters an der Decke innerhalb von rundum isolierten bzw. zum übrigen Innenraum des Deckenadapters abgegrenzten Halbrundsockeln angeordnet sind, so dass in vorschriftsmäßiger Weise keine Möglichkeit mehr besteht, dass die Adern der elektrischen Zuleitung oder die Adern der mit dieser verbundenen weiteren elektrischen Leitungen mit der Decke oder mit den Befestigungsschrauben des Deckenadapters an der Decke in Kontakt kommen. Die flache Ausführung der Kontaktträgerplatten sowie die Kontaktierung der elektrischen Anschlüsse im Leuchtenadapter mit den elektrischen Anschlüssen im Deckenadapter in der Art zweier ineinander greifender Hälften einer Klauenkupplung sorgen dabei ebenso wie die ineinander verschachtelte Montage beider Adapter des Befestigungssystems über Bajonettverschlüsse für den weiteren Vorteil, dass das erfindungsgemäße Befestigungssystem eine relativ geringe Bauhöhe und einen kleinen Baudurchmesser erfordert. Darüber hinaus weist das erfindungsgemäße Befestigungssystem gegenüber bekannten Befestigungssystemen noch den Vorteil auf, dass die beiden Hauptfunktionen solcher Systeme, nämlich einerseits das Tragen der Leuchtenlast und andererseits das elektrische Verbinden der Leuchte klar voneinander getrennt sind, indem der Kraftfluss ausschließlich über die Wandungen des Leuchtenadapters und des Deckenadapters geleitet wird, während die in diesen angeordneten gesonderten Kontaktträgerplatten ausschließlich der Zuleitung von elektrischem Strom zur Leuchte dienen. Dabei ist es ein weiterer Vorteil, dass der Leuchtenadapter nicht nur zur Befestigung einer bestimmten Leuchtenart geeignet ausgebildet ist, sondern über mehrere Möglichkeiten zur Befestigung verschiedener Leuchtenarten verfügt, die jeweils wahlweise aktiviert werden können. Ebenso ist es in vorteilhafter Weise möglich, das erfindungsgemäße Befestigungssystem zum Anschluss einer Wandleuchte oder auch als Verteilerdose an der Wand eines Gebäudes zu nutzen.

### Kurze Beschreibung der Zeichnungen

Die Erfindung wird nachfolgend anhand eines Ausführungsbeispiels näher erläutert. In den dazugehörigen Zeichnungen zeigen dabei:
- Figur 1: eine Gesamtansicht des erfindungsgemäßen Befestigungssystems in Sprengdarstellung aus einer Deckenperspektive;
- Figur 2: eine Gesamtansicht des erfindungsgemäßen Befestigungssystems in Sprengdarstellung aus einer Bodenperspektive;
- Figur 3: eine Draufsicht auf die Unterseite des Deckenadapters des erfindungsgemäßen Befestigungssystems;

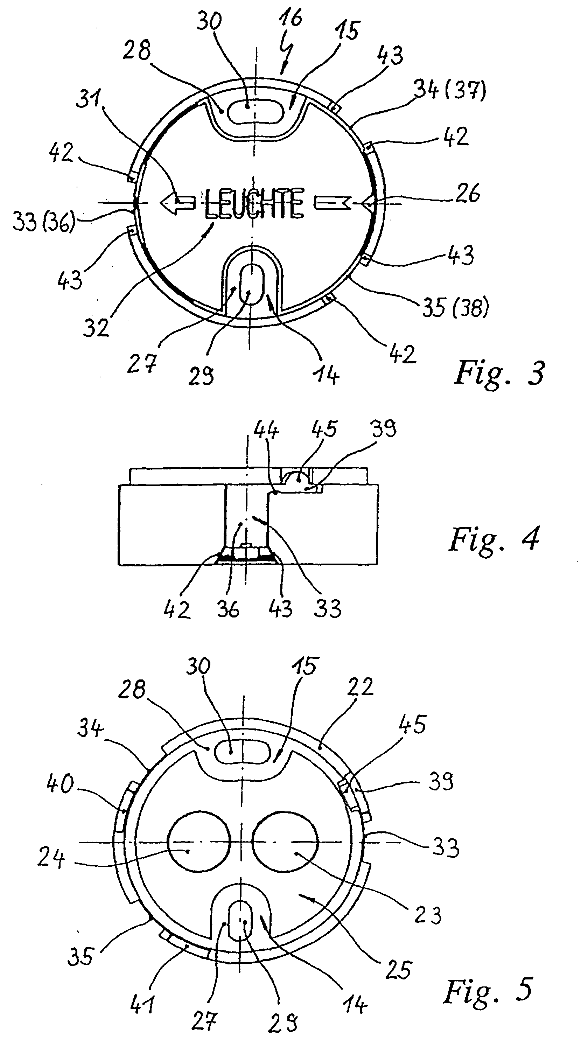

- Figur 3: eine Seitenansicht des Deckenadapters des erfindungsgemäßen Befestigungssystems;
- Figur 5: eine Draufsicht auf die Oberseite des Deckenadapters des erfindungsgemäßen Befestigungssystems;

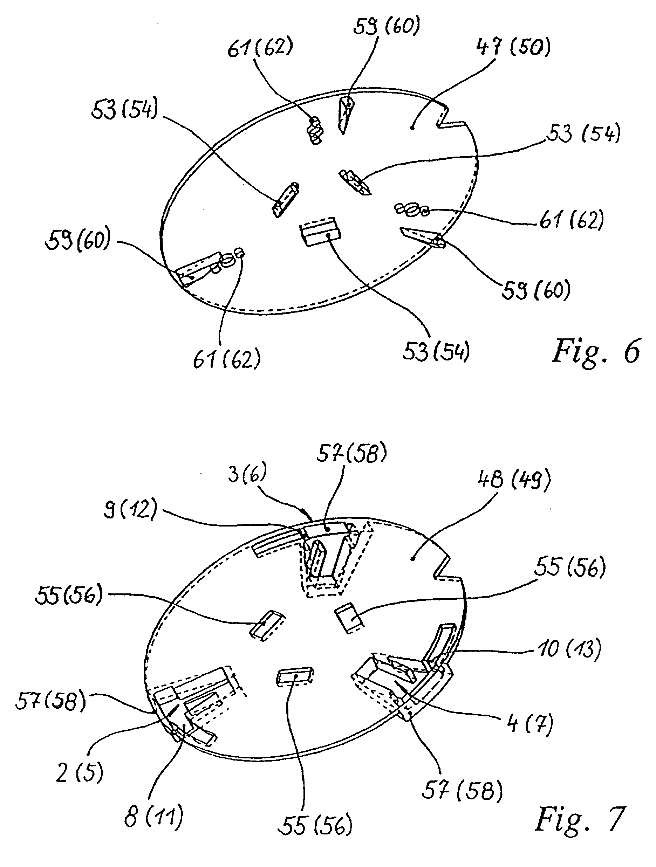

- Figur 6: eine perspektivische Ansicht der einen Teilplatte der Kontaktträgerplatten des erfindungsgemäßen Befestigungssystems;
- Figur 7: eine perspektivische Ansicht der anderen Teilplatte der Kontaktträgerplatten des erfindungsgemäßen Befestigungssystems;

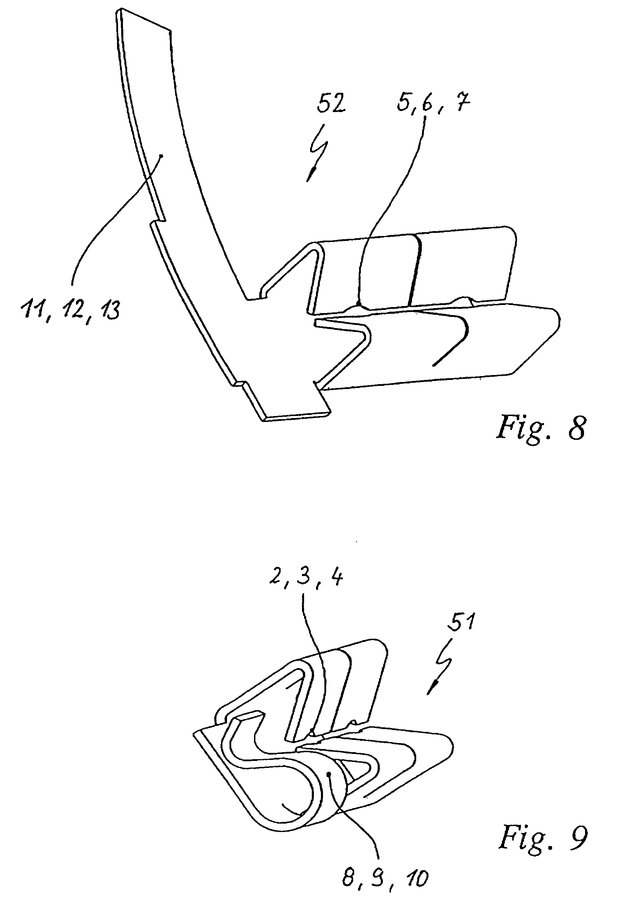

- Figur 8: eine vergrößerte Darstellung eines als Kontaktmesser ausgebildeten Metallbiegeteils für die elektrischen Anschlüsse und Kontakte des erfindungsgemäßen Befestigungssystems;
- Figur 9: eine vergrößerte Darstellung eines als Kontaktbuchse ausgebildeten Metallbiegeteils für die elektrischen Anschlüsse und Kontakte des erfindungsgemäßen Befestigungssystems;

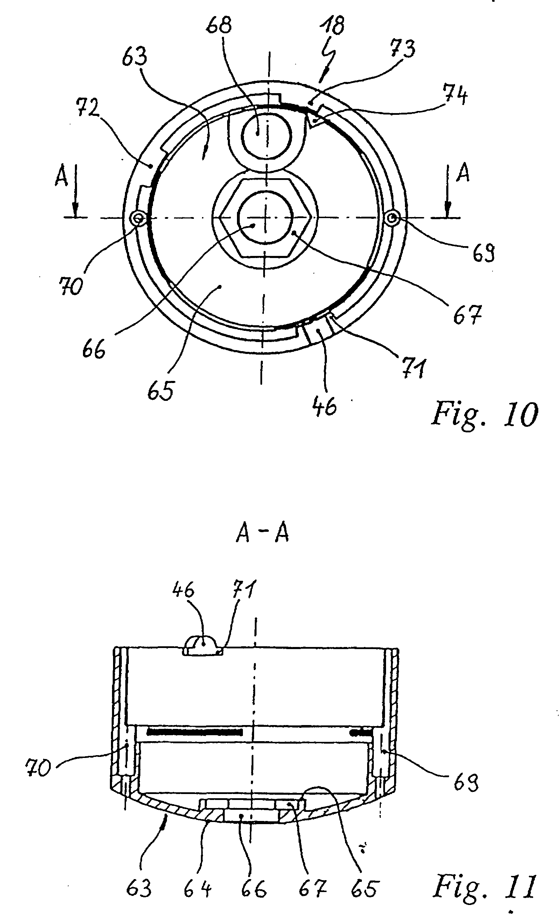

- Figur 10: eine Draufsicht auf die Innenseite des Leuchtenadapters des erfindungsgemäßen Befestigungssystems;
- Figur 11: den Schnitt A - A nach Figur 10 durch den Leuchtenadapter des erfindungsgemäßen Befestigungssystems.

### Ausführliche Beschreibung der Zeichnungen

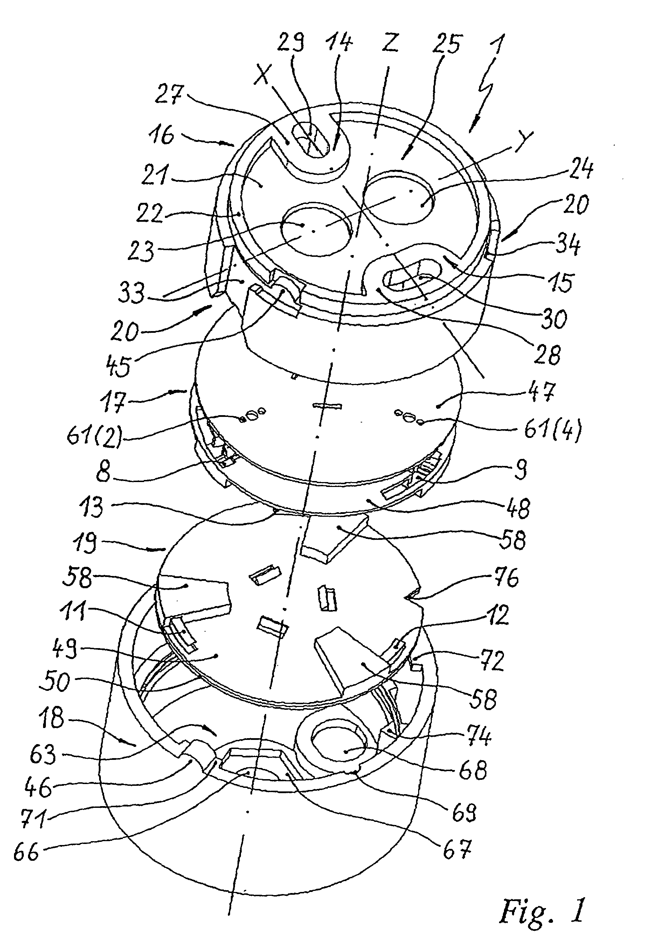

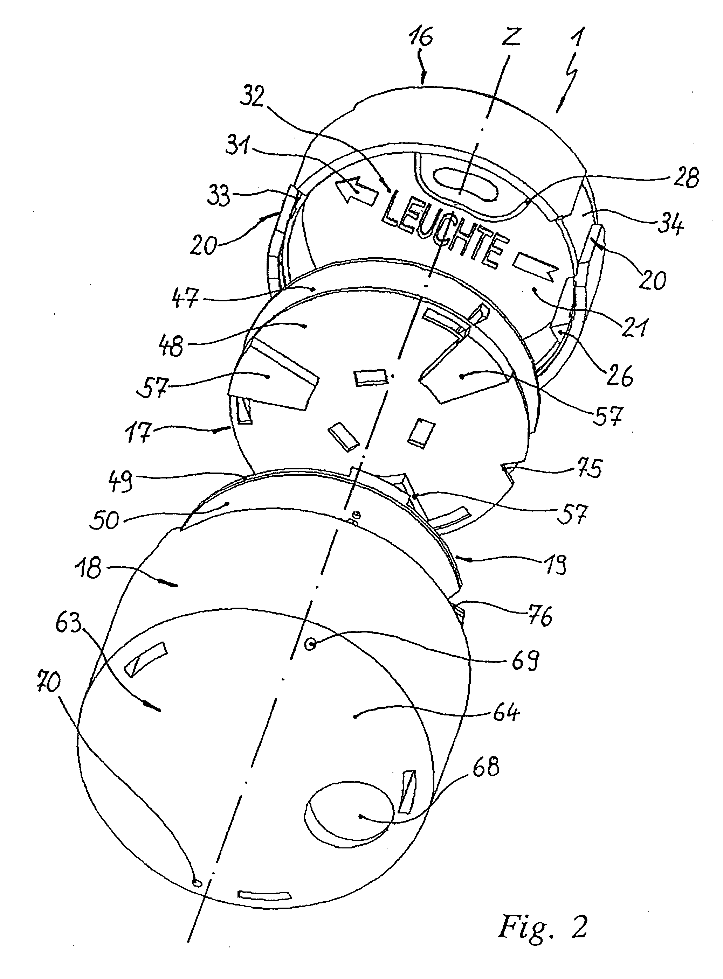

Aus den Figuren 1 und 2 geht deutlich ein System 1 zum Befestigen und zum Anschluss eines elektrischen Verbrauchers an einer Decke eines Gebäudes hervor, welches beispielhaft für eine hängende Deckenleuchte mit einer exzentrischen Zugentlastung geeignet ausgebildet ist. Dieses System 1 ist in der vorliegenden Ausführung im Bereich des aus der Decke herausragenden Leitungsendes einer unter Putz verlegten Zuleitung für elektrischen Strom montierbar und besteht im wesentlichen aus einem topfförmigen Leuchtenadapter 16 mit einer ersten komplementären Kontaktträgerplatte 17 sowie aus einem ebenfalls topfförmigen Leuchtenadapter 18 mit einer zweiten komplementären Kontaktträgerplatte 19. Die erste Kontaktträgerplatte 17 weist dabei einerseits erste Anschlüsse 2, 3, 4 für die Adern der elektrischen Zuleitung und andererseits erste Kontakte 8, 9, 10 zu einer Verbraucherleitung auf und ist in den an der Decke vormontierbaren Deckenadapter 16 einsetzbar. Die zweite Kontaktträgerplatte 19 weist dagegen einerseits zweite Anschlüsse 5, 6, 7 für die Adern der Verbraucherleitung und andererseits zweite Kontakte 11, 12, 13 zur elektrischen Zuleitung auf und ist in den an der Deckenleute vormontierbaren Leuchtenadapter 18 einsetzbar. Wie in den Sprengdarstellungen der Figuren 1 und 2 angedeutet, ist der Leuchtenadapter 18 darüber hinaus über einen Schnellverschluss 20 am Deckenadapter 16 montierbar, wobei gleichzeitig alle Kontakte 8, 9, 10 und 11, 12, 13 an den Kontaktträgerplatten 17, 19 miteinander verbunden werden.

Anhand der Darstellungen in den Figuren 1 und 5 ist es weiterhin ersichtlich, dass der deckenseitig angeordnete Boden 21 des topfförmigen Deckenadapters 16 in das Adapterinnere eingerückt ausgebildet und im Montagezustand nur mit einer Ringfläche 22 an der Decke lagefixiert ist. Der zwischen der Decke und dem Boden 21 des Deckenadapters 16 gebildete Zwischenraum ist dabei als Raum für eine Schutzhülle für die durch diesen hindurch führende elektrische Zuleitung vorgesehen. Ebenso ist in diesen Darstellungen zu sehen, dass der Boden 21 des Deckenadapters 16 auf einer horizontalen Adapterquerachse Y nebeneinander angeordnete, kreisförmige Sollbruchstellen für Durchbrüche 23, 24 aufweist, von denen eine zur Einführung der elektrischen Zuleitung in den Deckenadapter 16 vorgesehen ist.

In den Figuren 2 und 3 ist desweiteren erkennbar, dass an die Innenwandung des Deckenadapters 16 ein parallel zu dessen axialer Symmetrieachse Z verlaufender Dreieckssockel 26 angeformt ist, der mit seiner Profilspitze entlang der horizontalen Adapterquerachse Y weist und zum verdrehsicheren Einsetzen der ersten Kontaktträgerplatte 17 in den Deckenadapter 16 vorgesehen ist. Ebenso geht aus diesen Zeichnungen hervor, dass an der Innenseite des Bodens 21 des Deckenadapters 16 ein entlang der horizontalen Adapterquerachse Y verlaufender und in die gleiche Richtung weisender Pfeil 31 angeformt ist, der durch einen gleichfalls angeformten, parallel zu diesem verlaufenden Schriftzug 32 "LEUCHTE" unterbrochen wird und zusammen mit diesem Schriftzug 32 die Positionierung des Deckenadapters 16 an der Decke in Bezug auf die zu befestigende Deckenleuchte anzeigt. Darüber hinaus sind an die Innenwandung des Deckenadapters 16 noch zwei sich gegenüberliegende und dessen Boden 21 durchdringende Halbrundsockel 27, 28 für die Befestigungsschrauben eingearbeitet ist. In den Figuren 1 und 2 ist dabei deutlich zu sehen, dass diese Halbrundsockel 27, 28 für die Befestigungsschrauben an der Innenwandung des Deckenadapters 16 parallel zu dessen axialer Symmetrieachse Z verlaufen und auf einer um 90° zur horizontalen Adapterquerachse Y versetzten vertikalen Adapterquerachse X angeordnet sind.

Weiterhin zeigen die Sprengdarstellungen in den Figuren 1 und 2, dass der Schnellverschluss 20 zwischen dem Deckenadapter 16 und dem Leuchtenadapter 18 als Bajonettverschluss ausgebildet ist. Wie den Figuren 3 bis 5 dabei entnehmbar ist, sind deshalb in die Außenwandung des Deckenadapters 16 drei unsymmetrisch winkelversetzt zueinander angeordnete Bajonettlaufbahnen 33, 34, 35 eingeformt, die jeweils aus einer parallel zur axialen Symmetrieachse Z des Deckenadapters 16 verlaufenden Einführnut 36, 37, 38 sowie aus einer in dessen Umfangsrichtung verlaufenden, jeweils in die Einführnut 36, 37, 38 mündenden Fixiernut 39, 40, 41 bestehen. Deutlich sichtbar ist dabei eine Bajonettlaufbahn 33 mit ihrer Einführnut 36 in Höhe der horizontalen Adapterquerachse Y angeordnet, von der aus die unsymmetrisch winkelversetzten Positionen der anderen Bajonettlaufbahnen 34, 35 festgelegt werden. Zusätzlich sind die Nutwände der Einführnuten 36, 37, 38 aller Bajonettlaufbahnen 33, 34, 35 an ihrem leuchtenseitigen Nutanfang mit Einführungsschrägen 42, 43 der in Figur 4 gezeigten Art ausgebildet, mit denen die Montage des Leuchtenadapters 18 am Deckenadapter 16 erleichtert wird. Aus der Darstellung in Figur 4 geht außerdem hervor, dass die leuchtenseitigen Nutwände der Fixiernuten 39, 40, 41 aller Bajonettlaufbahnen 33, 34, 35 am Übergang zu ihren Einführnuten 36, 37, 38 jeweils mit einer dachförmigen Erhöhung 44 zur Arretierung des Leuchtenadapters 18 ausgebildet sind, welche, wie in Figur 1 ohne nähere Bezeichnung verdeutlicht wird, eine flachere Steigung in Fügerichtung und eine steilere Steigung in Löserichtung des Leuchtenadapters 18 aufweist. Darüber hinaus ist die in Figur 4 sichtbare Bajonettlaufbahn 33 als einzigste aller Bajonettlaufbahnen 33, 34, 35, an der deckenseitigen Nutwand ihrer Fixiernut 39 mit einer halbkreisförmigen Nuterweiterung 45 ausgebildet, die den Endanschlag der Bajonettlaufbahn 33 visuell kennzeichnet und nach korrekter Montage des Systems 1 von einem in Figur 1 sichtbaren, am deckenseitigen Adapterrand des Leuchtenadapters 18 entsprechend angeordneten, halbkreisförmigen Noppen 46 verdeckt wird.

Desweiteren wird es durch die Figuren 1 und 2 deutlich, dass die erste und die zweite Kontaktträgerplatte 17 und 19 in ihrer Grundform baugleich ausgebildet sind und aus je zwei kreisförmigen Teilplatten 47, 48 und 49, 50 bestehen. Diese Teilplatten 47, 48 beziehungsweise 49, 50 der Kontaktträgerplatten 17,19 werden, wie deren Einzeldarstellungen in den Figuren 6 und 7 entnehmbar ist, durch einerseits angeordnete Rastnasen 53, 54 und andererseits angeordnete Rastschlitze 55, 56 miteinander verbunden, wobei in die Oberfläche jeweils einer Teilplatte 48, 49 drei um 120° versetzt zueinander angeordnete, jeweils von deren Plattenrand ausgehende und kreisringsegmentförmig ausgebildete Kontakttaschen 57, 58 angeformt sind. In diese Kontakttaschen 57, 58 werden für beide Kontaktträgerplatten 17, 19 jeweils unterschiedlich ausgebildete und die elektrischen Anschlüsse 2, 3, 4 beziehungsweise 5, 6, 7 sowie die gegenseitigen Kontakte 8, 9, 10 beziehungsweise 11, 12, 13 aufweisende, in den Figuren 8 und 9 abgebildete Metallbiegeteile 51, 52 eingelegt, die durch an der Oberfläche der jeweils anderen Teilplatte 47, 50 der Kontaktträgerplatten17,19 angeformte Druckleisten 59,60 beim Verbinden der Teilplatten 47, 48 und 49, 50 über die erwähnten Rastverbindungen lagefixiert werden. Die in Figur 9 dargestellten Metallbiegeteile 51 der ersten Kontaktträgerplatte 17 für den Dekkenadapter 16 weisen dabei als Kontaktbuchsen ausgebildete Kontakte 8, 9, 10 zur Verbraucherleitung und als Doppelklemmlaschen ausgebildete erste Anschlüsse 2, 3, 4 für die Adern der elektrischen Zuleitung auf, während die in Figur 8 dargestellten Metallbiegeteile 52 der zweiten Kontaktträgerplatte 19 für den Leuchtenadapter 18 als Kontaktmesser ausgebildete Kontakte 11, 12, 13 zur elektrischen Zuleitung und ebenfalls als Doppelklemmlaschen ausgebildete zweite Anschlüsse 5, 6, 7 für die Adern der Verbraucherleitung aufweisen. Nach dem Einlegen der Metallbiegeteile 51, 52 in die Kontakttaschen 57, 58 der Teilplatten 48, 49 und dem Aufklipsen der Teilplatten 47, 50 verlaufen sowohl die Kontaktbuchsen der Metallbiegeteile 51 als auch die Kontaktmesser der Metallbiegeteile 52 koaxial zum Mittelpunkt der Kontaktträgerplatten 17, 19, wobei die Kontaktbuchsen der Metallbiegeteile 51 über einen seitlichen Durchbruch in den Kontakttaschen 57 der Teilplatte 48 der ersten Kontaktträgerplatte 17 kontaktierbar sind und die Kontaktmesser der Metallbiegeteile 52 aus den Kontakttaschen 58 der Teilplatte 49 der zweiten Kontaktträgerplatte 19 seitlich herausragen. Die Doppelklemmlaschen der Metallbiegeteile 51, 52 sind dabei über die in Figur 6 erkennbaren, jeweils doppelt ausgeführten Bohrungen 61, 62 kontaktierbar, zwischen denen jeweils eine dritte, nicht näher bezeichnete Bohrung zum Einführen eines Werkzeuges beim Lösen der Anschlüsse 2, 3, 4 sowie 5, 6, 7 verläuft. Das Einfügen der Adern der elektrischen Zuleitung und der Verbraucherleitung in die Anschlüsse 2, 3, 4 und 5, 6, 7 der Metallbiegeteile 51, 52 erfolgt jedoch werkzeuglos durch die Bohrungen 61, 62 in den Teilplatten 47, 50 der Kontaktträgerplatten 17, 19 hindurch als reine Steckverbindung, und anschließend werden die Kontaktträgerplatten 17. 19 über jeweils adapterinnenwandseitig angeordnete, in den Zeichnungen nicht näher dargestellte Rastnasen in den Deckenadapter 16 beziehungsweise in den Leuchtenadapter 18 eingeklipst. Wie in den Figuren 1 und 2 angedeutet, sind dabei die zueinander weisenden Kontakttaschen 57, 58 der Kontaktträgerplatten 17, 19 winkelversetzt zueinander angeordnet, so dass bei der Montage des Systems 1 die Kontakte 11, 12, 13 der zweiten Kontaktträgerplatte 19 mit den Kontakten 8, 9, 10 der ersten Kontaktträgerplatte 17 in elektrische Steckverbindung treten und gleichzeitig das Systems 1 zusammen mit dem als Bajonettverschluss ausgebildeten Schnellverschluss 20 mechanisch arretieren.

Die nähere Ausbildung des in den Figuren 1 und 2 mit einer halbkugelförmigen Außenseite 64 seines leuchtenseitigen Bodens 63 ausgebildeten topfförmigen Leuchtenadapters 18 wird schließlich noch anhand der Darstellungen in den Figuren 10 und 11 verdeutlicht. In diesen Zeichnungen ist klar erkennbar, dass die eben ausgebildete Innenseite 65 des Bodens 63 des Leuchtenadapters 18 eine zentrische Bohrung 66 aufweist, die innenseitig zusätzlich um die Außenkontur 67 einer Sechskantmutter erweitert und durch Ausbrechen der Außenseite 64 über eine Sollbruchkerbe sowie durch Einlegen einer passenden Sechskantmutter in die eingeformte Außenkontur 67 zur wahlweisen Montage einer Rohrpendel- oder Einseilaufhängung einer Deckenleuchte vorgesehen ist. Eine weitere Montagemöglichkeit für eine exzentrische Zugentlastung einer Deckenleuchte oder zur Kabeldurchführung der Verbraucherleitung am Leuchtenadapter 18 bietet darüber hinaus der ebenfalls in den Figuren 10 und 11 sichtbare, im Boden 63 des Leuchtenadapters 18 neben der Bohrung 66 für die Rohrpendel- oder Einseilaufhängung angeordnete, weitere außenseitig geschlossene Durchbruch 68, der durch Ausbrechen der Außenseite 64 des Bodens 63 über eine Sollbruchkerbe, wie in Figur 2 dargestellt, aktivierbar ist. Darüber hinaus sind als dritte, ebenfalls in den Figuren 10 und 11 ersichtliche Montagemöglichkeit einer Deckenleuchte an die Innenwandung des Leuchtenadapters 18 noch zwei sich gegenüberliegend angeordnete und durch dessen Boden 63 durchgehende Stufendurchbrüche 69, 70 angeformt, die zum Einhängen der Seilnippel einer Zweiseilaufhängung einer Deckenleuchte vorgesehen und nach der Montage des Leuchtenadapters 18 am Deckenadapter 16 auf den gleichen senkrechten Achsen wie die Durchgangs-Langlöcher 29, 30 für die Befestigungsschrauben des Deckenadapters 16 angeordnet sind.

Desweiteren ist in den Figuren 10 und 11 zu sehen, dass der Leuchtenadapter 18 deckenseitig bis zu einer etwa der Höhe des Deckenadapters 16 entsprechenden Tiefe einen dem Außendurchmesser des Deckenadapters 16 entsprechenden Innendurchmesser aufweist, wobei an dem mit diesem Innendurchmesser ausgebildeten Teil seiner Innenwandung drei vom Adapterrand ausgehende, ebenso wie die Bajonettlaufbahnen 33, 34, 35 am Deckenadapter 16 unsymmetrisch winkelversetzt zueinander angeordnete Bajonettnasen 71, 72, 73 angeformt sind. Ebenso geht aus diesen Zeichnungen der zum deckenseitigen Innendurchmesser abgestuft verkleinerte leuchtenseitige Innendurchmesser des Leuchtenadapters 18 hervor, an dessen Innenwandung ein parallel zu dessen axialer Symmetrieachse Z verlaufender Dreieckssockel 74 angeformt ist. Dieser Dreieckssockel 74 ist ebenso wie der Dreieckssockel 26 des Dekkenadapters 16 zum verdrehsicheren Einsetzten der zweiten Kontaktträgerplatte 19 in den Leuchtenadapter 18 vorgesehen und nach der Montage des Systems 1 entgegen der Fügerichtung des Leuchtenadapters 18 um die Länge der Fixiemuten 39, 40, 41 des Bajonettlaufbahnen 33, 34, 35 am Deckenadapter 16 versetzt zum Dreieckssockel 26 des Deckenadapters 16 angeordnet. Entsprechend dieser Ausführung des Deckenadapters 16 und des Leuchtenadapters 18 mit den Dreieckssockeln 26 und 74 weisen die Kontaktträgerplatten 17, 19 letztlich noch jeweils eine, in den Figuren 1 und 2 deutlich erkennbare, in deren Plattenrand eingearbeitete Dreiecksaussparung 75, 76 von der Größe des Profilquerschnitts der Dreieckssockel 26, 74 im Deckenadapter 16 und im Leuchtenadapter 18 auf, mit welchen die Kontaktträgerplatten 17, 19 unter eindeutiger Zuordnung der Kontakte 11, 12, 13 der Verbraucherleitung zu den Kontakten 8, 9, 10 der elektrischen Zuleitung auf die Dreieckssockel 26, 74 aufgesetzt sowie in den Deckenadapter 16 und in den Leuchtenadapter 18 eingeklipst werden.

### Bezugszahlenliste

- 1 -: System
- 2 -: erster Anschluss
- 3 -: erster Anschluss
- 4 -: erster Anschluss
- 5 -: zweiter Anschluss
- 6 -: zweiter Anschluss
- 7 -: zweiter Anschluss
- 8 -: Kontakte
- 9 -: Kontakte
- 10 -: Kontakte
- 11 -: Kontakte
- 12 -: Kontakte
- 13 -: Kontakte
- 14 -: Befestigungsmittel
- 15 -: Befestigungsmittel
- 16 -: Deckenadapter
- 17 -: erste Kontaktträgerplatte
- 18 -: Leuchtenadapter
- 19 -: zweite Kontaktträgerplatte
- 20 -: Schnellverschluss
- 21 -: Boden
- 22 -: Ringfläche
- 23 -: Durchbruch
- 24 -: Durchbruch
- 25 -: Zwischenraum
- 26 -: Dreieckssockel
- 27 -: Halbrundsockel
- 28 -: Halbrundsockel
- 29 -: Durchgangs-Langloch
- 30 -: Durchgangs-Langloch
- 31 -: Pfeil
- 32 -: Schriftzug
- 33 -: Bajonettlaufbahn
- 34 -: Bajonettlaufbahn
- 35 -: Bajonettlaufbahn
- 36 -: Einführnut
- 37 -: Einführnut
- 38 -: Einführnut
- 39 -: Fixiernut
- 40 -: Fixiernut
- 41 -: Fixiemut
- 42 -: Einführschräge
- 43 -: Einführschräge
- 44 -: Erhöhung
- 45 -: Nuterweiterung
- 46 -: Noppen
- 47 -: Teilplatte
- 48 -: Teilplatte
- 49 -: Teilplatte
- 50 -: Teilplatte
- 51-: Metallbiegeteil
- 52 -: Metallbiegeteil
- 53 -: Rastnase
- 54 -: Rastnase
- 55 -: Rastschlitz
- 56 -: Rastschlitz
- 57 -: Kontakttaschen
- 58 -: Kontakttaschen
- 59 -: Druckleisten
- 60 -: Druckleisten
- 61 -: Bohrungen
- 62 -: Bohrungen
- 63 -: Boden
- 64 -: Außenseite
- 65 -: Innenseite
- 66 -: Bohrung
- 67 -: Außenkontur
- 68 -: Durchbruch
- 69 -: Stufendurchbruch
- 70 -: Stufendurchbruch
- 71 -: Bajonettnasen
- 72 -: Bajonettnasen
- 73 -: Bajonettnasen
- 74 -: Dreieckssockel
- 75 -: Dreiecksaussparung
- 76 -: Dreiecksaussparung

## Patentansprüche

1. System zum Befestigen und zum Anschluss eines elektrischen Verbrauchers an einer Decke eines Gebäudes, insbesondere für eine hängende Deckenleuchte, mit folgenden Merkmalen:
■ das System (1) ist im Bereich des Leitungsendes einer unter oder über Putz verlegten Zuleitung für elektrischen Strom montierbar, welches aus der Decke herausragt oder an dieser endet,
■ das System (1) weist Befestigungsmittel (14, 15) zur Lagefixierung gegenüber der Decke sowie Befestigungselemente für eine Zugentlastung der Verbraucherleitung auf,
■ das System (1) besteht aus einem an der Decke vormontierbaren topfförmigen Deckenadapter (16) und aus einem an der Deckenleuchte vormontierbaren topförmigen Leuchtenadapter (18),
■ im Deckenadapter (16) sind erste Anschlüsse (2, 3, 4) für die Adern der elektrischen Zuleitung sowie erste Kontakte (8, 9, 10) zur elektrischen Verbindung mit dem Leuchtenadapter (18) aufgenommen,
■ im Leuchtenadapter sind zweite Anschlüsse (5, 6, 7) für die Adern einer Verbraucherleitung und zweite Kontakte (11, 12, 13) zur elektrischen Verbindung mit dem Deckenadapter (16) aufgenommen,
■ der Leuchtenadapter (18) ist am Deckenadapter (16) in nur einer definierten Stellung über einen Schnellverschluss (20) bei gleichzeitiger Verbindung aller Kontakte (8, 9, 10 und 11, 12, 13) montierbar,
**dadurch gekennzeichnet, dass**
■ die ersten Anschlüsse (2, 3, 4) und die ersten Kontakte (8, 9, 10) sowie die zweiten Anschlüsse (5, 6, 7) und die zweiten Kontakte (11, 12, 13) jeweils auf gesonderten, in ihrer Grundform baugleich ausgebildeten Kontaktträgerplatten (17, 19) angeordnet sind,
■ welche nach dem Einfügen der Adern der elektrischen Zuleitung und der Verbraucherleitung in die Anschlüsse (2, 3, 4 und 5, 6, 7) jeweils durch Formschluss im Deckenadapter (16) beziehungsweise im Leuchtenadapter (18) arretierbar sind,
■ und welche durch an den Kontaktträgerplatten (17, 19) sowie im Dekkenadapter (16) und im Leuchtenadapter (18) angeordnete komplementäre Formschlusselemente derart im Deckenadapter (16) und im Leuchtenadapter (18) verdrehsicher lagefixierbar sind,
■ dass diese bei der Montage des Systems (1) über den Schnellverschluss (20) unter eindeutiger Zuordnung der Kontakte (11, 12, 13) der Verbraucherleitung zu den Kontakten (8, 9, 10) der elektrischen Zuleitung miteinander in polgerechte elektrische Verbindung treten.

2. System nach Anspruch 1, **dadurch gekennzeichnet, dass**
■ die erste und die zweite Kontaktträgerplatte (17, 19) jeweils über adapterinnenwandseitig Rastnasen in den Deckenadapter (16) bzw. in den Leuchtenadapter (18) einklipsbar sind und bevorzugt aus je zwei kreisförmigen Teilplatten (47, 48 bzw. 49, 50) bestehen, welche ebenfalls durch einerseits angeordnete Rastnasen (53, 54) und andererseits angeordnete Rastschlitze (55, 56) miteinander verbindbar sind.

3. System nach Anspruch 2, **dadurch gekennzeichnet, dass**
■ zwischen den Teilplatten (47, 48 bzw. 49, 50) der Kontaktträgerplatten (17, 19) jeweils mehrere, die elektrischen Anschlüsse (2, 3, 4 bzw. 5, 6, 7) und die gegenseitigen Kontakte (8, 9, 10 bzw. 11, 12, 13) aufweisende Metallbiegeteile (51, 52) angeordnet sind.

4. System nach Anspruch 3, **dadurch gekennzeichnet, dass**
■ in eine Oberfläche jeweils einer Teilplatte (48, 49) der Kontaktträgerplatten (17, 19) bevorzugt drei um 120° versetzt zueinander angeordnete, jeweils von deren Plattenrand ausgehende und kreisringsegmentförmig ausgebildete Kontakttaschen (57, 58) eingeformt sind,
■ in welche die Metallbiegeteile (51, 52) eingelegt und in denen diese durch an einer Oberfläche der jeweils anderen Teilplatte (47, 50) angeformte Druckleisten (59, 60) beim Verbinden der Teilplatten (47, 48 und 49, 50) lagefixierbar sind.

5. System nach Anspruch 4, **dadurch gekennzeichnet, dass**
■ die Metallbiegeteile (51) in der ersten Kontaktträgerplatte (17) bevorzugt als Kontaktbuchsen ausgebildete Kontakte (8, 9, 10) zur Verbraucherleitung und als Doppelklemmlaschen ausgebildete erste Anschlüsse (2, 3, 4) für die Adern der elektrischen Zuleitung aufweisen,
■ wobei die koaxial zum Mittelpunkt der Kontaktträgerplatte (17) verlaufenden Kontaktbuchsen über einen seitlichen Durchbruch in den Kontakttaschen (57) der einen Teilplatte (48) und die Doppelklemmlaschen über entsprechende Bohrungen (61) in der anderen Teilplatte (47) kontaktierbar sind.

6. System nach Anspruch 4, **dadurch gekennzeichnet, dass**
■ die Metallbiegeteile (52) in der zweiten Kontaktträgerplatte (19) bevorzugt als Kontaktmesser ausgebildete Kontakte (11, 12, 13) zur elektrischen Zuleitung und als Doppelklemmlaschen ausgebildete zweite Anschlüsse (5, 6, 7) für die Adern der Verbraucherleitung aufweisen,
■ wobei die koaxial zum Mittelpunkt der Kontaktträgerplatte (19) verlaufenden Kontaktmesser aus den Kontakttaschen (58) der einen Teilplatte (49) seitlich herausragen und die Doppelklemmlaschen über entsprechende Bohrungen (62) in der anderen Teilplatte (50) kontaktierbar sind.

7. System nach Anspruch 1, **dadurch gekennzeichnet, dass**
■ der deckenseitig angeordnete Boden (21) des hohlzylindrischen Dekkenadapters (16) bevorzugt in das Adapterinnere eingerückt ausgebildet und im Montagezustand nur mit einer Ringfläche (22) an der Decke lagefixiert ist.

8. System nach Anspruch 7, **dadurch gekennzeichnet, dass**
■ der zwischen der Decke und dem Boden (21) des Deckenadapters (16) gebildete Zwischenraum (25) bevorzugt als Raum für eventuell notwendige Schutzhüllen für die durch diesen hindurch führende elektrische Zuleitung sowie für weitere elektrische Leitungen vorgesehen ist.

9. System nach Anspruch 7, **dadurch gekennzeichnet, dass**
■ der Boden (21) des Deckenadapters (16) bevorzugt zwei auf einer horizontalen Adapterquerachse (Y) nebeneinander angeordnete, kreisförmige Sollbruchkerben für Durchbrüche (23, 24) aufweist, die zur Einführung der elektrischen Zuleitung in den sowie ggf. zur Abführung einer weiteren elektrischen Leitung aus dem Deckenadapter (16) vorgesehen sind.

10. System nach Anspruch 1 und 9, **dadurch gekennzeichnet, dass**
■ an die Innenwandung des Deckenadapters (16) bevorzugt ein parallel zu dessen axialer Symmetrieachse (Z) verlaufender Dreieckssockel (26) angeformt ist, der mit seiner Profilspitze entlang der horizontalen Adapterquerachse (Y) weisend angeordnet und als Formschlusselement zur verdrehsicheren Lagefixierung der ersten Kontaktträgerplatte (17) im Deckenadapter (16) vorgesehen ist.

11. System nach Anspruch 10, **dadurch gekennzeichnet, dass**
■ an die Innenwandung des Deckenadapters (16) bevorzugt zwei sich gegenüberliegende und dessen Boden (21) durchdringende Halbrundsokkel (27, 28) angeformt sind, in die jeweils ein in Umfangsrichtung des Deckenadapters (16) und ein quer zu dieser verlaufendes Durchgangs-Langloch (29. 30) für Befestigungsschrauben eingearbeitet ist.

12. System nach Anspruch 10 und 11, **dadurch gekennzeichnet, dass**
■ die Halbrundsockel (27, 28) für die Befestigungsschrauben an der Innenwandung des Deckenadapters (16) bevorzugt parallel zur dessen axialer Symmetrieachse (Z) verlaufend sowie auf einer um 90° zur horizontalen Adapterquerachse (Y) versetzten vertikalen Adapterlängsachse (X) angeordnet sind.

13. System nach Anspruch 10, **dadurch gekennzeichnet, dass**
■ an der Innenseite des Bodens (21) des Deckenadapters (16) ein entlang der horizontalen Adapterquerachse (Y) verlaufender und in die gleiche Richtung wie der Dreieckssockel (26) weisender Pfeil (31) angeformt ist, der durch einen gleichfalls angeformten, parallel zu diesem verlaufenden Schriftzug (32) "LEUCHTE" unterbrochen ist.

14. System nach Anspruch 1, **dadurch gekennzeichnet, dass**
■ der Schnellverschluss (20) zwischen dem Deckenadapter (16) und dem Leuchtenadapter (18) bevorzugt als Bajonettverschluss ausgebildet ist und in die Außenwandung des Deckenadapters (16) bevorzugt drei unsymmetrisch winkelversetzt zueinander angeordnete Bajonettlaufbahnen (33, 34, 35) eingeformt sind.

15. System nach Anspruch 14, **dadurch gekennzeichnet, dass**
■ die Bajonettlaufbahnen (33, 34, 35) jeweils aus einer parallel zur axialen Symmetrieachse (Z) des Deckenadapters (16) verlaufenden Einfühmut (36, 37, 38) sowie aus einer in dessen Umfangsrichtung verlaufenden, jeweils in die Einführnut (36, 37, 38) mündenden Fixiernut (39, 40, 41) bestehen.

16. System nach Anspruch 15, **dadurch gekennzeichnet, dass**
■ eine der Bajonettlaufbahnen (33, 34, 35) mit ihrer Einführnut (36, 37, 38) in Höhe der horizontalen Adapterquerachse (Y) angeordnet ist und die Nutwände der Einführnuten (36, 37, 38) an ihrem leuchtenseitigen Nutanfang mit Einführschrägen (42, 43) zur Montageerleichterung des Leuchtenadapters (18) am Deckenadapter (16) ausgebildet sind.

17. System nach Anspruch 15, **dadurch gekennzeichnet, dass**
■ die leuchtenseitigen Nutwände der Fixiernuten (39, 40, 41) der Bajonettlaufbahnen (33, 34, 35) am Übergang zu ihren Einführnuten (36, 37, 38) jeweils mit einer dachförmigen Erhöhung (44) zur Arretierung des Leuchtenadapters (18) ausgebildet sind, welche eine flachere Steigung in Fügerichtung und eine steilere Steigung in Löserichtung des Leuchtenadapters (18) aufweist.

18. System nach Anspruch 15, **dadurch gekennzeichnet, dass**
■ eine der Bajonettlaufbahnen (33, 34, 35) an der deckenseitigen Nutwand ihrer Fixiernut (39, 40, 41) mit einer halbkreisförmigen Nuterweiterung (45) ausgebildet ist,
■ die den Endanschlag der Bajonettlaufbahn (33, 34, 35) visuell kennzeichnet und nach korrekter Montage des Systems (1) von einem am deckenseitigen Adapterrand des Leuchtenadapters (18) entsprechend angeordneten, halbkreisförmigen Noppen (46) verdeckbar ist.

19. System nach Anspruch 1, **dadurch gekennzeichnet, dass**
■ der leuchtenseitig angeordnete Boden (63) des hohlzylindrischen Leuchtenadapters (18) mit einer halbkugelförmigen, geschlossenen Außenseite (64) und einer ebenen Innenseite (65) mit einer zentrischen Bohrung (66) ausgebildet ist,
■ die an der Innenseite (65) des Bodens (63) um die Außenkontur (67) einer Sechskantmutter erweitert und durch Ausbrechen der Außenseite (64) über eine Sollbruchkerbe sowie durch Einlegen einer Sechskantmutter in die eingeformte Außenkontur (67) zur Montage einer Rohrpendel- oder Einseilaufhängung einer Deckenleuchte vorgesehen ist.

20. System nach Anspruch 19, **dadurch gekennzeichnet, dass**
■ im Boden (63) des Leuchtenadapters (18) neben der Bohrung (66) für die Rohrpendel- oder Einseilaufhängung ein weiterer außenseitig geschlossener Durchbruch (68) angeordnet ist,
■ der durch Ausbrechen der Außenseite (64) des Bodens (63) über eine Sollbruchkerbe zur wahlweisen Montage einer exzentrischen Zugentlastung einer Deckenleuchte oder zur Kabeldurchführung der Verbraucherleitung vorgesehen ist.

21. System nach Anspruch 11 und 19, **dadurch gekennzeichnet, dass**
■ an die Innenwandung des Leuchtenadapters (18) bevorzugt zwei sich gegenüberliegend angeordnete und durch dessen Boden (63) durchgehende Stufendurchbrüche (69, 70) zum wahlweisen Einhängen der Seilnippel einer Zweiseilaufhängung einer Deckenleuchte angeformt sind,
■ die nach der Montage des Leuchtenadapters (18) am Deckenadapter (16) auf den gleichen senkrechten Achsen wie die Durchgangs-Langlöcher (29, 30) für die Befestigungsschrauben des Deckenadapters (16) angeordnet sind.

22. System nach Anspruch 14 und 19, **dadurch gekennzeichnet, dass**
■ der Leuchtenadapter (18) deckenseitig bis zu einer etwa der Höhe des Deckenadapters (16) entsprechenden Tiefe einen dem Außendurchmesser des Deckenadapters (16) entsprechenden Innendurchmesser aufweist,
■ wobei an dem mit diesem Innendurchmesser ausgebildeten Teil seiner Innenwandung bevorzugt drei vom Adapterrand ausgehende, ebenso wie die Bajonettlaufbahnen (33, 34, 35) am Deckenadapter (16) unsymmetrisch winkelversetzt zueinander angeordnete Bajonettnasen (71, 72, 73) angeformt sind.

23. System nach Anspruch 19, **dadurch gekennzeichnet, dass**
■ der Leuchtenadapter (18) leuchtenseitig einen zum deckenseitigen Innendurchmesser abgestuft verkleinerten Innendurchmesser aufweist,
■ wobei an dem mit diesem Innendurchmesser ausgebildeten Teil seiner Innenwandung bevorzugt ein parallel zu dessen axialer Symmetrieachse (Z) verlaufender Dreieckssockel (74) als Formschlusselement zur verdrehsicheren Lagefixierung der zweiten Kontaktträgerplatte (19) im Leuchtenadapter (18) angeformt ist.

24. System nach Anspruch 10, 15 und 23, **dadurch gekennzeichnet, dass**
■ der Dreieckssockel (74) im Leuchtenadapter (18) nach Montage des Systems (1) entgegen der Fügerichtung des Leuchtenadapters (18) um die Länge der Fixiernuten (39, 40, 41) der Bajonettlaufbahnen (33, 34, 35) am Deckenadapter (16) versetzt zum Dreieckssockel (26) des Deckenadapters (16) angeordnet ist.

25. System nach Anspruch 2 und 24, **dadurch gekennzeichnet, dass**
■ die Kontaktträgerplatten (17, 19) als komplementäre Formschlusselemente zur verdrehsicheren Lagefixierung jeweils eine in deren Plattenrand eingearbeitete Dreiecksaussparung (75, 76) von der Größe des Profilquerschnitts der Dreieckssockel (26, 74) im Deckenadapter (16) und im Leuchtenadapter (18) aufweisen, mit welchen die Kontaktträgerplatten (17, 19) auf die Dreieckssockel (26, 74) im Deckenadapter (16) und im Leuchtenadapter aufschiebbar sind.

## Claims

1. System for fastening and for connecting an electrical consumer to a ceiling of a building, in particular for a hanging ceiling lamp, having the following features:
- the system (1) can be assembled in the region of the line end of a supply line for electric current that is installed under or above the plaster, which line end protrudes from the ceiling or ends therein;
- the system (1) comprises fastening means (14, 15) for fixing in position relative to the ceiling and fastening elements for relieving the stress on the consumer line;
- the system (1) comprises a pot-shaped ceiling adapter (16) that may be preassembled on the ceiling and a pot-shaped lamp adapter (18) that may be preassembled on the ceiling lamp;
- first terminals (2, 3, 4) for the cores of the electric supply line and first contacts (8, 9, 10) for the electrical connection to the lamp adapter (18) are incorporated in the ceiling adapter (16);
- second terminals (5, 6, 7) for the cores of a consumer line and second contacts (11, 12, 13) for the electrical connection to the ceiling adapter (16) are incorporated in the lamp adapter;
- the lamp adapter (18) can be assembled on the ceiling adapter (16) in only one defined position via a quick-release lock (20) when all of the contacts (8, 9,10 and 11, 12, 13) are connected simultaneously;
**characterised in that**:
- the first terminals (2, 3, 4) and the first contacts (8, 9, 10) and the second terminals (5, 6, 7) and the second contacts (11, 12, 13) are each disposed on separate contact carrier boards (17, 19,), which in their basic form are identically constructed,
- which, after the cores of the electric supply line and the consumer line have been inserted into the terminals (2, 3, 4 and 5, 6, 7), may each be locked by positive fit in the ceiling adapter (16) or in the lamp adapter (18),
- and which, by means of complementary positive fit elements disposed on the contact carrier boards (17, 19) and in the ceiling adapter (16) and in the lamp adapter (18), may be non-rotationally fixed in position in the ceiling adapter (16) and in the lamp adapter (18)
- such that said ceiling adapter and said lamp adapter, in the assembly of the system (1), enter into pole-appropriate electrical connection with each other via the quick-release lock (20), the contacts (11, 12, 13) of the consumer line being clearly allocated to the contacts (8, 9, 10) of the electric supply line.

2. System according to claim 1, **characterised in that**:
- the first and the second contact carrier boards (17, 19) may each be clipped into the ceiling adapter (16) or into the lamp adapter (18) via locking noses on the interior wall side of the adapter, and preferably each comprise two circular partial boards (47, 48 and 49, 50), which may also be connected with each other by means of locking noses (53, 54) disposed on one side and locking slots (55, 56) disposed on the other side.

3. System according to claim 2, **characterised in that**:
- a plurality of metal bending parts (51, 52) comprising the electric terminals (2, 3, 4 and 5, 6 7) and the corresponding contacts (8, 9, 10 and 11, 12, 13) are disposed in each case between the partial boards (47, 48 and 49, 50) of the contact carrier boards ( 17, 19).

4. System according to claim 3, **characterised in that**:
- preferably three annular segment-shaped contact pockets (57, 58), which are mutually offset by 120° and each emerge from the edge of the contact carrier boards, are shaped into a surface of each partial board (48, 49) of the contact carrier boards (17, 19),
- into which contact pockets the metal bending parts (51, 52) are inserted, and in which contact pockets said metal bending parts may be fixed in position during the connection of the partial boards (47, 48 and 49, 50), by means of pressure strips (59, 60) shaped on a surface of the respective other partial board (47, 50).

5. System according to claim 4, **characterised in that**:
- in the first contact carrier board (17), the metal bending parts (51) comprise contacts (8, 9, 10) to the consumer line, preferably configured as contact sockets, and first terminals (2, 3, 4) for the cores of the electric supply line, configured as double clamping lugs,
- wherein the contact sockets extending coaxially to the centre-point of the contact carrier board (17) may be contacted via a lateral perforation in the contact pockets (57) of the one partial board (48), and the double clamping lugs may be contacted via corresponding holes (61) in the other partial board (47).

6. System according to claim 4, **characterised in that**:
- in the second contact carrier board (19), the metal bending parts (52) comprise contacts (11, 12, 13) to the electric supply line, preferably configured as contact blades, and second terminals (5, 6, 7) for the cores of the consumer line, configured as double clamping lugs,
- wherein the contact blades extending coaxially to the centre-point of the contact carrier board (19) protrude laterally from the contact pockets (58) of the one partial board (49), and the double clamping lugs may be contacted via corresponding holes (62) in the other partial board (50).

7. System according to claim 1, **characterised in that**:
- the base (21), disposed on the ceiling side, of the hollow cylindrical ceiling adapter (16) is preferably indented into the adapter interior, and in the assembled state is fixed in position on the ceiling with only one annular surface (22).

8. System according to claim 7, **characterised in that**:
- the gap (25) formed between the ceiling and the base (21) of the ceiling adapter (16) is preferably provided as a space for protective cases that may be required for the electric supply line running through said gap, and for further electric lines.

9. System according to claim 7, **characterised in that**:
- the base (21) of the ceiling adapter (16) preferably comprises two circular interrupting notches for perforations (23, 24), arranged next to each other on a horizontal transverse axis (Y) of the adapter, which are provided for guiding the electric supply line into the ceiling adapter (16), and optionally for guiding a further electric line out of said ceiling adapter (16).

10. System according to claims 1 and 9, **characterised in that**:
- a triangular socket (26) is shaped into the interior wall of the ceiling adapter (16), preferably extending parallel to the axial axis of symmetry (Z) of said ceiling adapter, which triangular socket is disposed with its profiled tip pointing along the horizontal transverse axis (Y) of the adapter, and is provided as a positive fit element for the non-rotational fixing in position of the first contact carrier board (17) in the ceiling adapter (16).

11. System according to claim 10, **characterised in that**:
- two opposing semi-round sockets (27, 28) are preferably shaped into the interior wall of the ceiling adapter (16), penetrating the base (21) of said ceiling adapter, into which semi-round sockets a respective through-slot (29, 30) for fastening screws extending in the circumferential direction of the ceiling adapter (16), and transversally thereto, is incorporated.

12. System according to claims 10 and 11, **characterised in that**:
- the semi-round sockets (27, 28) for the fastening screws are disposed on the interior wall of the ceiling adapter (16), preferably extending parallel to the axial axis of symmetry (Z) thereof, and also on a vertical longitudinal axis (X) of the adapter offset at 90° to the horizontal transverse axis (Y) of the adapter.

13. System according to claim 10, **characterised in that**:
- an arrow (31) extending along the horizontal transverse axis (Y) of the adapter and pointing in the same direction as the triangular socket (26) is formed on the inside of the base (21) of the ceiling adapter (16), which arrow is interrupted by a similarly formed label (32) "LAMP", extending parallel thereto.

14. System according to claim 1, **characterised in that**:
- the quick-release lock (20) between the ceiling adapter (16) and the lamp adapter (18) is preferably configured as a bayonet catch, and three bayonet tracks (33, 34, 35), which are asymmetrically angularly offset relative to one another, are preferably shaped into the exterior wall of the ceiling adapter (16).

15. System according to claim 14, **characterised in that**:
- the bayonet tracks (33, 34, 35) each comprise an insertion groove (36, 37, 38) extending parallel to the axial axis of symmetry (Z) of the ceiling adapter (16), and a fixing groove (39, 40, 41) extending in the circumferential direction of said ceiling adapter and opening into the respective insertion groove (36, 37, 38).

16. System according to claim 15, **characterised in that**:
- one of the bayonet tracks (33, 34, 35) is disposed with its insertion groove (36, 37, 38) at the level of the horizontal transverse axis (Y) of the adapter, and the groove walls of the insertion grooves (36, 37, 38) are configured at their starts on the lamp side with insertion slopes (42, 43) for facilitating assembly of the lamp adapter (18) on the ceiling adapter (16).

17. System according to claim 15, **characterised in that**:
- the lamp-side groove walls of the fixing grooves (39, 40, 41) of the bayonet tracks (33, 34, 35) are each configured at the point of transition to their insertion grooves (36, 37, 38) with a roof-shaped elevation (44) for locking the lamp adapter (18), which elevation displays a relatively flat incline in the joining direction and a relatively steep incline in the detachment direction of the lamp adapter (18).

18. System according to claim 15, **characterised in that**:
- one of the bayonet tracks (33, 34, 35) is configured on the ceiling-side groove wall of its fixing groove (39, 40, 41) with a semi-circular groove extension (45),
- which visually indicates the end stop of the bayonet track (33, 34, 35) and, once the system (1) has been correctly assembled, may be covered by a semi-circular nap (46), correspondingly disposed on the ceiling-side edge of the lamp adapter (18).

19. System according to claim 1, **characterised in that**:
- the base (63), disposed on the lamp side, of the hollow cylindrical lamp adapter (18) is configured with a hemispherical, closed exterior side (64) and a flat interior side (65) with a central hole (66),
- which extends on the interior side (65) of the base (63) around the exterior contour (67) of a hexagonal nut and, by interrupting the exterior side (64) via an interrupting notch and by inserting a hexagonal nut into the formed exterior contour (67), is provided for assembling a tubular pendulum suspension means or a monocable suspension means of a ceiling lamp.

20. System according to claim 19, **characterised in that**:
- a further perforation (68), which is closed on the exterior side, is disposed in the base (63) of the lamp adapter (18) next to the hole (66) for the tubular pendulum suspension means or monocable suspension means,
- which perforation, by interrupting the exterior side (64) of the base (63) via an interrupting notch, is provided for optionally assembling an eccentric device for relieving the stress on a ceiling lamp or for feeding through the cable of the consumer line.

21. System according to claims 11 and 19, **characterised in that**:
- two stepped perforations (69, 70), which are disposed opposite each other and penetrate the base (63) of the lamp adapter (18), are preferably shaped into the interior wall of the lamp adapter (18), in order optionally to suspend the cable nipples of a bicable suspension means of a ceiling lamp,
- which stepped perforations, after the assembly of the lamp adapter (18) on the ceiling adapter (16), are disposed on the same perpendicular axes as the through-slots (29, 30) for the fastening screws of the ceiling adapter (16).

22. System according to claims 14 and 19, **characterised in that**:
- on the ceiling side, up to a depth corresponding substantially to the height of the ceiling adapter (16), the lamp adapter (18) has an internal diameter corresponding to the external diameter of the ceiling adapter (16),
- three bayonet noses (71, 72, 73), which emerge from the adapter edge and, like the bayonet tracks (33, 34, 35) on the ceiling adapter (16), are disposed asymmetrically angularly offset relative to one another, are preferably shaped on the part of the interior wall that is configured with this internal diameter.

23. System according to claim 19, **characterised in that**:
- on the lamp side, the lamp adapter (18) has an internal diameter that is reduced in stages relative to the ceiling-side internal diameter,
- a triangular socket (74), which extends parallel to the axial axis of symmetry (Z) of the lamp adapter (18), is preferably shaped in the part of the interior wall that is configured with this internal diameter, as a positive fit element for the non-rotational fixing in position of the second contact carrier board (19) in the lamp adapter (18).

24. System according to claims 10, 15 and 23, **characterised in that**:
- after the assembly of the system (1), the triangular socket (74) in the lamp adapter (18) is disposed counter to the joining direction of the lamp adapter (18), offset relative to the triangular socket (26) of the ceiling adapter (16) by the length of the fixing grooves (39, 40, 41) of the bayonet tracks (33, 34, 35) on the ceiling adapter (16).

25. System according to claims 2 and 24, **characterised in that**:
- the contact carrier boards (17, 19) comprise respective triangular recesses. (75, 76), the size of the profile cross-section of the triangular sockets (26, 74) in the ceiling adapter (16) and in the lamp adapter (18), which recesses are incorporated in the board edge as complementary positive fit elements for non-rotational fixing in position, by means of which the contact carrier boards (17, 19) may be placed onto the triangular sockets (26, 74) in the ceiling adapter (16) and in the lamp adapter.

## Revendications

1. Système pour fixer et connecter un consommateur électrique au plafond d'un bâtiment, en particulier pour un plafonnier en suspension ayant les caractéristiques suivantes :
• le système (1) peut être monté dans la zone d'extrémité d'un câble d'alimentation en courant électrique encastré ou apparent qui dépasse du plafond ou se termine sur celui-ci,
• le système (1) présente des moyens de fixation (14, 15) permettant le blocage en position par rapport au plafond ainsi que des éléments de fixation pour une décharge en traction du câble du consommateur,
• le système (1) consiste en un adaptateur de plafond (16) en forme de pot pouvant être pré-monté au plafond et d'un adaptateur de luminaire (18) en forme de pot pouvant être pré-monté sur le plafonnier,
• l'adaptateur de plafond (16) abrite des premières connexions (2, 3, 4) pour les brins du câble d'alimentation électrique ainsi que des premiers contacts (8, 9, 10) permettant la liaison électrique avec l'adaptateur de luminaire (18),
• l'adaptateur de luminaire abrite des deuxièmes connexions (5, 6, 7) pour les brins d'un câble de consommateur et des deuxièmes contacts (11, 12, 13) permettant la liaison électrique avec l'adaptateur de plafond (16),
• l'adaptateur de luminaire (18) peut être monté sur l'adaptateur de plafond (16) dans une seule position définie par l'intermédiaire d'un raccord rapide (20) avec connexion simultanée de tous les contacts (8, 9, 10 et 11, 12, 13),
**caractérisé en ce que**
• les premières connexions (2, 3, 4) et les premiers contacts (8, 9, 10) ainsi que les deuxièmes connexions (5, 6, 7) et les deuxièmes contacts (11, 12, 13) sont chacun disposés sur des plaques supports de contact (17, 19) séparées, ayant la même forme de base,
• pouvant être bloquées après l'insertion des brins du câble d'alimentation électrique et du câble de consommateur dans les connexions (2, 3, 4 et 5, 6, 7) par liaison positive dans l'adaptateur de plafond (16) respectivement dans l'adaptateur de luminaire (18),
• et dont la position peut être bloquée dans l'adaptateur de plafond (16) et dans l'adaptateur de luminaire (18) de manière à ne pas pivoter par des éléments de liaison positive complémentaires disposés sur les plaques supports de contact (17, 19) ainsi que dans l'adaptateur de plafond (16) et dans l'adaptateur de luminaire (18) de telle façon
• que ceux-ci entrent en liaison électrique conforme à la polarisation lors du montage du système (1) via le raccord rapide (20) avec affectation univoque des contacts (11, 12, 13) du câble de consommateur aux contacts (8, 9, 10) du câble d'alimentation électrique.

2. Système selon la revendication 1, **caractérisé en ce que**
• la première et la deuxième plaque support de contact (17, 19) peuvent être clipsées dans l'adaptateur de plafond (16) respectivement dans l'adaptateur de luminaire (18) par l'intermédiaire de nez d'encliquetage côté paroi intérieure de l'adaptateur et sont constituées, de préférence, de deux parties de plaques circulaires (47, 48 respectivement 49, 50) qui peuvent également être reliées ensemble par des nez d'encliquetage disposés d'un côté (53, 54) et des fentes d'encliquetage (55, 56) disposées d'un autre côté.

3. Système selon la revendication 2, **caractérisé en ce que**
• entre les parties de plaques (47, 48 respectivement 49, 50) des plaques supports de contact (17, 19) sont disposées plusieurs pièces métalliques pliées (51, 52) présentant les connexions électriques (2, 3, 4 respectivement 5, 6, 7) et les contacts mutuels (8, 9, 10 respectivement 11, 12, 13).

4. Système selon la revendication 3, **caractérisée en ce que**
• sur une surface d'une partie de plaque (48, 49) des plaques supports de contact (17, 19), de préférence trois poches de contact (57, 58) en forme d'arc de cercle disposées décalées de 120° l'une par rapport à l'autre et partant chacune de leur bord de plaque, sont modelées
• dans lesquelles sont déposées les pièces métalliques pliées (51, 52) et dans lesquelles celles-ci peuvent être bloquées en position sur une surface de l'autre partie de plaque (47, 50) de barres de pression modelées, lors de la liaison des parties de plaque (47, 48 et 49, 50).

5. Système selon la revendication 4, **caractérisé en ce que**
• les pièces pliées métalliques (51) présentent, sur la première plaque support de contact (17) des contacts (8, 9, 10), de préférence en forme de douilles de contact vers le câble de consommateurs et des premières connexions (2, 3, 4), configurées comme plaquettes de serrage doubles pour les brins du câble électrique,
• les douilles de contact disposées coaxialement au centre de la plaque support de contact (17) pouvant être mises en contact par l'intermédiaire d'un ajour latéral dans les plaquettes de contact (57) de l'une des parties de plaque (48) et les plaquettes de serrage doubles par l'intermédiaire de perçages (61) correspondants dans l'autre partie de plaque (47).

6. Système selon la revendication 4, **caractérisé en ce que**
• les pièces métalliques pliées (52) présentent, dans la deuxième plaque support de contact (19) de préférence des contacts (11, 12, 13) configurés en lames de contact vers le câble d'alimentation électrique et des deuxièmes connexions (5, 6, 7) en forme de plaquettes de serrage doubles (5, 6, 7) pour les brins du câble de consommateur,
• les lames de contact disposées coaxialement au centre de la plaque support de contact (19) dépassant sur le côté des poches de contact (58) d'une partie de plaque (49) et les plaquettes de serrage doubles pouvant être mises en contact par l'intermédiaire de perçages (62) correspondant dans l'autre partie de plaque (50).

7. Système selon la revendication 1, **caractérisé en ce que**
• le fond (21), disposé côté plafond, de l'adaptateur de plafond cylindrique creux (16) est, de préférence, enfoncé, à l'intérieur de l'adaptateur et n'est bloqué en position au plafond qu'avec une surface annulaire (22) en situation montée.

8. Système selon la revendication 7, **caractérisé en ce que**
• l'espace (25) formé entre le plafond et le fond (21) de l'adaptateur de plafond (16) est prévu, de préférence, en tant qu'espace pour des gaines de protection éventuellement nécessaires pour le câble d'alimentation électrique qui le traverse ainsi que pour d'autres câbles électriques.

9. Système selon la revendication 7, **caractérisé en ce que**
• le fond (21) de l'adaptateur de plafond (16) présente de préférence deux encoches de rupture théorique circulaires disposées l'une à côté de l'autre sur un axe transversal horizontal de l'adaptateur (Y) pour des ajours (23, 24) qui sont prévus pour introduire le câble d'alimentation électrique dans l'adaptateur de plafond (16) ainsi que pour faire sortir un autre câble électrique de l'adaptateur de plafond (16).

10. Système selon les revendications 1 et 9, **caractérisé en ce que**
• sur la paroi interne de l'adaptateur de plafond (16) est modelé de préférence un socle triangulaire (26) parallèle à l'axe de symétrie axial (Z) de celui-ci qui est disposé de manière à ce que la pointe de son profil soit dirigée le long de l'axe transversal horizontal (Y) de l'adaptateur et soit prévu en tant qu'élément de liaison positive pour le blocage en position anti-rotation de la première plaque support de contact (17) dans l'adaptateur de plafond (16).

11. Système selon la revendication 10, **caractérisé en ce que**
• sur la paroi interne de l'adaptateur de plafond (16) sont modelés de préférence deux socles semi-circulaires (27, 28) se faisant face et traversant le fond (21) de celui-ci, dans chacun desquels est pratiqué un trou oblong traversant (29, 30) dans le sens périphérique de l'adaptateur de plafond (16) et un transversal au sens périphérique.

12. Système selon les revendications 10 et 11, **caractérisé en ce que**
• les socles semi-circulaires (27, 28) pour les vis de fixation sont disposés sur la paroi interne de l'adaptateur de plafond (16) de préférence parallèlement à l'axe de symétrie axial (Z) de celui-ci ainsi que sur un axe longitudinal vertical (X) de l'adaptateur décalé de 90° par rapport à l'axe transversal horizontal (Y) de l'adaptateur.

13. Système selon la revendication 10, **caractérisé en ce que**
• sur le côté intérieur du fond (21) de l'adaptateur de plafond (16) est modelée une flèche (31) passant le long de l'axe transversal horizontal (Y) de l'adaptateur et dirigée dans le même sens que le socle triangulaire (26), flèche qui est interrompue par une inscription (32) "LUMINAIRE" également modelée, parallèle à celle-ci.

14. Système selon la revendication 1, **caractérisé en ce que**
• le raccord rapide (20) entre l'adaptateur de plafond (16) et l'adaptateur de luminaire (18) a, de préférence, la forme d'un raccord à baïonnette et **en ce que** de préférence, trois trajectoires de baïonnette (33, 34, 35), disposées de façon asymétrique avec un décalage angulaire l'une par rapport à l'autre, sont pratiquées dans la paroi extérieure de l'adaptateur de plafond (16).

15. Système selon la revendication 14, **caractérisé en ce que**
• les trajectoires de baïonnette (33, 34, 35) sont chacune constituées d'une rainure d'introduction (36, 37, 38) parallèle à l'axe de symétrie axial (Z) de l'adaptateur de plafond (16) ainsi que d'une rainure de fixation (39, 40, 41) dirigée dans le sens périphérique de celui-ci et débouchant dans la rainure d'introduction (36, 37, 38) concernée.

16. Système selon la revendication 15, **caractérisé en ce que**
• l'une des trajectoires de baïonnette (33, 34, 35) est disposée, avec sa rainure d'introduction (36, 37, 38) à hauteur de l'axe transversal horizontal (Y) de l'adaptateur et les parois des rainures d'introduction (36, 37, 38) sont configurées, à leur départ côté luminaire, avec des chanfreins d'introduction (42, 43) pour faciliter le montage de l'adaptateur de luminaire (18) sur l'adaptateur de plafond (16).

17. Système selon la revendication 15, **caractérisé en ce que**
• les parois-côté luminaire des rainures de fixation (39, 40, 41) des trajectoires de baïonnette (33, 34, 35) sont configurées, au niveau de la transition avec leurs rainures d'introduction (36, 37, 38) avec une protubérance en forme de toit (44) permettant de bloquer l'adaptateur de luminaire (18) qui présente une rampe plus faible dans le sens de l'assemblage et une rampe plus raide dans le sens du démontage de l'adaptateur de luminaire (18).

18. Système selon la revendication 15, **caractérisé en ce que**
• une des trajectoires de baïonnette (33, 34, 35) est configurée, sur la paroi côté plafond de leur rainure de fixation (39, 40, 41) avec une extension de rainure (45) en forme de demi-cercle,
• qui signale visuellement la butée finale de la trajectoire de baïonnette (33, 34, 35) et qui peut être couverte après le montage correct du système (1) par une nope (46) semi-circulaire disposé en conséquence sur le bord côté plafond de l'adaptateur de luminaire (18).

19. Système selon la revendication 1, **caractérisé en ce que**
• le fond (63), disposé côté luminaire, de l'adaptateur de luminaire (18) cylindrique creux est configuré avec un côté extérieur (64) fermé semi-circulaire et un côté intérieur plan (65) ayant un perçage (66) central,
• qui est élargi sur le côté intérieur (65) du fond (63) par le contour extérieur (67) d'un écrou six pans et prévu pour le montage d'une suspension à tube pendulaire ou monocâble d'un plafonnier par la sortie du côté extérieur (64) par l'intermédiaire d'une encoche de rupture théorique ainsi que par l'introduction d'un écrou six pans dans le contour extérieur (67) formé.

20. Système selon la revendication 19, **caractérisé en ce que**
• sur le fond (63) de l'adaptateur de luminaire (18), à côté du perçage (66) pour la suspension à tube pendulaire ou monocâble, est disposé un autre ajour (68) fermé côté extérieur,
• qui est prévu, par la sortie du côté extérieur (64) du fond (63) par l'intermédiaire d'une encoche de rupture théorique, pour le montage au choix d'une décharge de traction excentrique d'un plafonnier ou pour le passage du câble de consommateur.

21. Système selon les revendications 11 et 19, **caractérisé en ce que**
• sont modelés, sur la paroi interne de l'adaptateur de luminaire (18) de préférence deux ajours étagés (69, 70) disposés l'un en face de l'autre et traversant le fond (63) de celui-ci pour l'accrochage au choix des niples de câble d'une suspension à deux câbles d'un plafonnier,
• qui sont disposés, après le montage de l'adaptateur de luminaire (18) sur l'adaptateur de plafond (16) sur les mêmes axes verticaux que les trous oblongs traversants (29, 30) pour les vis de fixation de l'adaptateur de plafond (16).

22. Système selon les revendication 14 et 19, **caractérisé en ce que**
• l'adaptateur de luminaire (18), côté plafond, présente, jusqu'à une profondeur correspondant à peu près à la hauteur de l'adaptateur de plafond (16) un diamètre intérieur correspondant au diamètre extérieur de l'adaptateur de plafond (16),
• de préférence trois nez de baïonnette (71, 72, 73) partant du bord de l'adaptateur, disposés de façon asymétrique avec un décalage angulaire l'un par rapport à l'autre tout comme les trajectoires de baïonnette (33, 34, 35) sur l'adaptateur de plafond (16) étant modelés sur la partie configurée avec ce diamètre intérieur de sa paroi intérieure.

23. Système selon la revendication 19, **caractérisé en ce que**
• l'adaptateur de luminaire (18) présente, côté luminaire, un diamètre intérieur réduit étagé par rapport au diamètre intérieur côté plafond,
• sur la partie configurée avec ce diamètre intérieur de sa paroi intérieure, de préférence un socle triangulaire (74) parallèle à l'axe de symétrie axial (Z) de celui-ci étant modelé en tant qu'élément de liaison positive pour le blocage en position anti-rotation de la deuxième plaque support de contact (19) dans l'adaptateur de luminaire (18).

24. Système selon les revendications 10, 15 et 23, **caractérisé en ce que**
• le socle triangulaire (74), dans l'adaptateur de luminaire (18), est disposé, après le montage du système (1) à l'inverse du sens d'assemblage de l'adaptateur de luminaire (18), décalé par rapport au socle triangulaire (26) de l'adaptateur de plafond (16) de la longueur des rainures de fixation (39, 40, 41) des trajectoires de baïonnette (33, 34, 35).

25. Système selon les revendications 2 et 24, **caractérisé en ce que**
• les plaques supports de contact (17, 19) présentent, en tant qu'éléments de liaison positive complémentaires pour le blocage en position anti-rotation, un évidement triangulaire (75, 76) pratiqué dans leur bord de plaque de la dimension de la section de profil des socles triangulaires (26, 74) dans l'adaptateur de plafond (16) et dans l'adaptateur de luminaire, avec lesquels les plaques supports de contact (17, 19) peuvent être déplacées sur les socles triangulaires (26, 74) dans l'adaptateur de plafond (16) et dans l'adaptateur de luminaire.
